# EUROPÄISCHE PATENTSCHRIFT

(11) **EP 3 877 308 B1**
(45) Veröffentlichungstag und Bekanntmachung des Hinweises auf die Patenterteilung: **10.04.2024**
(21) Anmeldenummer: 19787174.2
(22) Anmeldetag: 08.10.2019
(51) Int. Cl.: B65G 47/71, B65G 47/82

(54) **VORRICHTUNG ZUM GRUPPIEREN VON BEHÄLTERN**
DEVICE FOR GROUPING CONTAINERS
DISPOSITIF DE REGROUPEMENT DE CONTENANTS

(30) Priorität: 08.11.2018 DE 102018219083
(43) Veröffentlichungstag der Anmeldung: 15.09.2021
(73) Patentinhaber: Krones AG, 93073 Neutraubling (DE)
(72) Erfinder: SCHUESSLBURNER, Helmut, 93073 Neutraubling (DE)
(74) Vertreter: Grünecker Patent- und Rechtsanwälte PartG mbB
(86) Internationale Anmeldenummer: PCT/EP2019/077188
(87) Internationale Veröffentlichungsnummer: WO 2020/094318

(56) Entgegenhaltungen:
- EP-A1- 0 659 665
- WO-A1-2014/195391
- US-A- 4 599 025

## Beschreibung

### Gebiet der Erfindung

Die vorliegende Erfindung betrifft eine Vorrichtung zum Gruppieren transportierter Behälter, beispielsweise Flaschen, insbesondere in einer Behälterbehandlungsanlage.

### Stand der Technik

In Behälterbehandlungsanlagen, beispielsweise in der Getränkeindustrie, werden die zu behandelnden Behälter häufig umverteilt oder umgruppiert, um beispielsweise mehrere parallel verarbeitbare Behälterströme oder Gebinde von Behältern zu erzeugen. So erfolgt der Behältertransport zwischen einer Etikettiermaschine und einem Einwegpacker zur Gebindeherstellung beispielsweise nach dem folgenden Schema: Im Nachlauf zur Etikettiermaschine werden die Behälter in der Regel einreihig transportiert, wobei fehlerhafte Behälter aus dem Behälterstrom ausgeschleust werden. Nach Behälterverzögerung mittels mehrfachen Geschwindigkeitsabbaus durch die verwendeten Transportbänder wird die einreihige Formation aufgelöst, sodass ein ungeordneter Massentransport entsteht. Aus diesem Massentransport werden die Behälter durch Eindrängelung in Gassen und Aufstauen der Behälter in den Einzelgassen schließlich verteilt, wobei eine Behältervorgruppierung durch einen sogenannten Behältereinteiler erfolgt. Die vorgruppierten Behälter können anschließend einem Einwegpacker zugeführt werden, um Gebinde von Behältern, beispielsweise in Form von Getränkekästen, zu erstellen.

Das oben beschriebene Verfahren zum Verteilen und Gruppieren von Behältern weist jedoch eine Vielzahl von Nachteilen in Hinsicht auf die Prozesssicherheit auf. So besteht beispielsweise aufgrund der reibungsbehafteten Geschwindigkeitsreduzierung der Behälter durch die Transportbänder eine Gefahr des Kippens. Bei weichen Behältern oder klebrigen Recycling-PET Behältern ist zudem auch die Gasseneindrängelung problematisch, wobei nicht druckresistente weiche Behälter allgemein schlecht unter Staudruck befördert werden können. Ein Transport der Behälter unter Staudruck wie in dem oben beschriebenen ungeordneten Massentransport führt darüber hinaus häufig zur Beschädigung der auf den Behältern aufgebrachten Etiketten und ist für Formbehälter wie zum Beispiel rechteckige PET-Behälter oder auch Behälter aus weichem Karton generell nicht durchführbar. Des Weiteren gestaltet sich eine Umstellung auf ein anderes Behälterformat oft umständlich und fehleranfällig, wobei lange Inbetriebnahmezeiten aufgrund der teilweise hohen Komplexität in Kauf genommen werden müssen. Zudem hat die beschriebene Vorrichtung einen hohen Platzbedarf und keine ausreichende Pufferkapazität.

Um eine verbesserte Pufferkapazität zu erzielen, werden sogenannte Linearachsenportalsysteme eingesetzt, die quer und vertikal zu einem einlaufenden Behälterstrom bewegbare Schiebeelemente aufweisen, mit denen eine oder mehrere Reihen von Behältern, im Folgenden auch Behälterzeilen genannt, von dem Einlaufförderer, beispielsweise einem Transportband, quer zur Förderrichtung des Einlaufförderers verschoben und dadurch auf einen Querförderer, beispielsweise mit einer Vielzahl von Transportbändern, überführt werden. Durch wiederholtes Überschieben von Behälterzeilen auf die Transportbänder des Querförderers können eine Vielzahl von Behältern vorübergehend gepuffert werden, um beispielsweise vorübergehende Störungen einer vorgeschalteten oder nachgeschalteten Behälterbehandlungsstation abfedern zu können.

Die genannten Linearachsenportalsysteme werden dabei als Einlaufmanipulator zur Übernahme einer oder mehrerer Behälterzeilen von einem Zuförderer sowie als Auslaufmanipulator zur Übergabe einer oder mehrerer Behälterzeilen an einen Abförderer eingesetzt. Ein Nachteil der eingesetzten Puffersysteme besteht jedoch darin, dass die gepufferten Behälter auf dem oder den Transportbändern nicht gegen Umfallen gesichert werden können. Einzelne Behälterreihen bzw. Behälterzeilen können nicht unabhängig voneinander manipuliert werden. Des Weiteren erfolgt bei diesen Systemen die Pufferfunktion mittels eines der Einlauf- und Auslaufmanipulatoren. Daher hat die Pufferfunktion einen erheblichen Anteil an der Taktzeit. Dies wirkt sich nachteilig auf die Puffergröße aus.

Zum Gruppieren und Puffern von Behältern werden häufig auch Palettenumlaufsysteme eingesetzt, bei denen Gruppen von Behältern von einzelnen Paletten transportiert werden. Dabei werden die Paletten durch ein zentrales Zugmittel, beispielsweise eine Kette, über Kupplungen angetrieben, beispielsweise gezogen. Durch externe Stopper können einzelne Paletten angehalten werden. Nachfolgende Paletten fahren dabei auf die stehenden Paletten auf und bleiben somit stehen. Solch ein System, welches den Oberbegriff des Anspruchs 1 zeigt, ist in der EP0659665 A1 offenbart.

Der vorliegenden Erfindung liegt somit die Aufgabe zugrunde, eine verbesserte Gruppierung von Behältern auf ihrem Transportweg in einer Behälterbehandlungsanlage zu erreichen. Darüber hinaus soll ein kompakter Puffer für die Behälter zur Verfügung gestellt werden. Die Vorrichtung zum Gruppieren und Puffern der Behälter soll flexibel an einen Wechsel des Behälterformats anpassbar sein. Zudem sollen die transportierten Behälter schonend und ohne umzufallen gruppiert werden.

### Beschreibung der Erfindung

Die oben genannten Aufgaben werden gelöst durch eine Vorrichtung zum Gruppieren von Behältern gemäß Anspruch 1.

Bei den Behältern kann es sich um Dosen, Glasflaschen oder andere Glasbehälter mit Deckel, Kunststoffflaschen, beispielsweise aus PET, Formbehälter, wie zum Beispiel rechteckige PET-Behälter, Behälter aus Karton oder Verbundstoffen, beispielsweise Tetrapack, oder ähnliches handeln. Insbesondere können Behälter unterschiedlicher Größen, Querschnitte und/oder unterschiedlichen Gewichts mit der erfindungsgemäßen Vorrichtung gruppiert und gepuffert werden.

Die Transferpaletten können einen oder mehrere Behälter stehend transportieren. Dabei können mehrere Behälter in einer oder mehreren Reihen auf der Palette angeordnet sein.

Erfindungsgemäß ist eine erste Transfervorrichtung mit einem Einlaufmanipulator vorgesehen, der dazu ausgebildet ist, Behälter von einem Zuförderer auf die erste Transferplattform zu überführen. Die erste Transfervorrichtung ist dabei dazu ausgebildet, Behälter von dem Zuförderer für die Übernahme durch die Transferfördereinrichtung bereitzustellen. Der Einlaufmanipulator kann die Behälter beispielsweise mittels geeignet ausgebildeter Greifelemente erfassen und auf die Transferplattform hinüber heben. Alternativ kann der Einlaufmanipulator mit einem oder mehreren Schiebeelementen ausgestattet sein, die die Behälter von dem Zuförderer auf die Transferplattform hinüberschieben. Der Zuförderer kann die Behälter in Form eines einreihigen oder mehrreihigen Einlaufstroms zufördern, und hierzu insbesondere ein oder mehrere Transportbänder aufweisen. Des Weiteren können Weichen oder Einteiler vorgesehen sein, mit denen sich ein einreihiger Einlaufstrom an Behältern auf mehrere Reihen aufteilen lässt. Die Behälter können auf Stoß zugefördert werden oder aber mit einer festen Teilung, d.h. einem festen Abstand aufeinanderfolgender Behälter, transportiert werden.

Der Zuförderer kann alternativ zu der Verwendung von Transportbändern einen Langstator-Linearmotor zum Transport der Behälter mittels individuell bewegbarer Transportelemente, sogenannter Läufer, Mover oder Pucks, einsetzen. Langstator-Linearmotoren sind im Stand der Technik allgemein bekannt, sodass hier auf eine detaillierte Beschreibung verzichtet wird. Die Transportelemente bzw. Läufer weisen im Allgemeinen Sekundärteile auf, an denen Permanent- und/oder Elektromagnete angeordnet sind, die mit den Elektromagneten des Langstators wechselwirken, wodurch eine Kraft auf die Läufer ausgeübt wird, durch die die Läufer mit individuellen Weg-Zeit-Profilen entlang der jeweiligen Transportbahn bewegt werden können. Schließlich kann der Zuförderer die Behälter auch mittels einer Transportkette zufördern.

Der Einlaufmanipulator kann wie unten im Detail beschrieben mit einem Portalsystem ausgestattet sein, das über Linearachsen eine Bewegung in vertikaler Richtung, d.h. senkrecht zu einer Aufstandsfläche der Vorrichtung, im Allgemeinen dem Hallenboden, und eine Bewegung in horizontaler Richtung, d.h. parallel zu der Aufstandsfläche der Vorrichtung, quer zur Transportrichtung der Behälter im einlaufenden Behälterstrom ermöglicht. Hierzu sind die Linearachsen des Portalsystems wie an sich bekannt mit einem oder mehreren Motoren, insbesondere Servomotoren, ausgestattet, die die Bewegungen in den beiden Richtungen bewirken.

Der Einlaufmanipulator kann zudem ein oder mehrere Schiebeelemente aufweisen, mit denen die Behälter von dem Zuförderer auf die erste Transferplattform geschoben werden können. Alternativ kann der Einlaufmanipulator ein oder mehrere Greifelemente aufweisen, mit denen die Behälter von dem Zuförderer abgehoben und auf der ersten Transferplattform abgestellt werden können. Die Bewegung der Linearachsen des Einlaufmanipulators wird dabei über eine Steuer- und/oder Regeleinheit der Vorrichtung gesteuert. Der Einlaufmanipulator kann zudem einen Langstator-Linearmotor mit einer Vielzahl von individuell gesteuert bewegbaren Transportelementen aufweisen, die die Schiebeelemente bzw. Greifelemente tragen. Der Langstator-Linearmotor kann mit einer oder mehreren Führungsschienen ausgebildet sein, die parallel zum einlaufenden Behälterstrom ausgerichtet sind, sodass die Transportelemente, und mit ihnen die Schiebeelemente bzw. Greifelemente, gezielt auf den einlaufenden Behälterstrom aufsynchronisiert werden können. Nach Synchronisierung mit dem Behälterstrom können die Schiebeelemente bzw. Greifelemente des Langstator-Linearmotors von oben über die Bewegung der Linearachsen des Einlaufmanipulators zwischen die Behälter im einlaufenden Behälterstrom geführt werden, sodass die Behälter von dem Zuförderer mittels der Schiebeelemente bzw. Greifelemente auf die erste Transferplattform überführt werden können.

Zur Manipulation der Behälter im einlaufenden Behälterstrom kann das Portalsystem den Langstator-Linearmotor mit den Transportelementen von oben nach unten führen, und nach Überschub von Behältern auf die erste Transferplattform kann es den Langstator-Linearmotor mit den Transportelementen von unten nach oben führen. Hier und im Folgenden sind die Begriffe "oben" und "unten" bezüglich des Gravitationsfeldes im üblichen Sinne, d.h. im Allgemeinen bezüglich einer Aufstandsfläche der Vorrichtung, zu verstehen. Durch den Einsatz eines Langstator-Linearmotors lassen sich insbesondere gezielt einzelne Behälter im einlaufenden Behälterstrom anfahren und separieren, sodass beispielsweise als fehlerhaft erkannte Behälter ausgelassen werden können. Es versteht sich, dass der Einlaufmanipulator auch Behälter aus mehrreihigen Einlaufströmen manipulieren und überführen kann. Zudem können die Schiebeelemente bzw. Greifelemente derart ausgebildet sein, dass sie bei einem Formatwechsel der Behälter umgestellt werden können. Beispielsweise können bewegliche Abstandsmittel zwischen einem Schiebeelement und einem Gegenhalteelement des Einlaufmanipulators vorgesehen sein, die durch manuelle oder automatische Anpassung eine Änderung des Behälterformats gestatten. Eine Vielzahl weiterer Variationen von Manipulatoren zum Überführen von Behältern sind im Stand der Technik bekannt und können nach Bedarf mit der beschriebenen Vorrichtung kombiniert werden.

Die erste Transferplattform bildet erfindungsgemäß eine Ebene, auf der die mittels des Einlaufmanipulators überführten Behälter stehend zur Übernahme durch die weiter unten beschriebenen Transferpaletten bereitgehalten werden. Dabei können die Behälter insbesondere in Reihen, d.h. Behälterzeilen, auf der Transferplattform stehen. Die Behälter, insbesondere Behälterzeilen, können auf der Transferplattform, insbesondere mittels des Einlaufmanipulators, verschoben werden. Auf diese Weise kann mittels des Einlaufmanipulators auch aus einem einreihigen Einlaufstrom eine Vielzahl von Behälterzeilen auf der Transferplattform angeordnet werden. Die Steuerung des Einlaufmanipulators kann dabei erneut durch die Steuer- und/oder Regeleinheit erfolgen. Die Oberfläche der ersten Transferplattform kann insbesondere aus einem Material mit geringem Reibungswiderstand, beispielsweise Stahl, Aluminium, oder einem anderen Metall bzw. einer Metalllegierung, gebildet sein, sodass die Behälter ohne umzufallen über die Oberfläche der Transferplattform geschoben werden können.

Die erste Transferplattform kann insbesondere feststehend angeordnet sein. Bevorzugt ist die erste Transferplattform derart ausgebildet, dass die Oberfläche der Transferplattform im Wesentlichen horizontal ausgerichtet ist. Hier und im Folgenden ist unter einer im Wesentlichen horizontalen Ausrichtung eine Ausrichtung zu verstehen, die um weniger als 5°, bevorzugt weniger als 2°, besonders bevorzugt weniger als 1 ° von der Horizontalen abweicht. Die horizontale Ebene ist dabei durch die Erdbeschleunigung als Normalvektor definiert. Eine horizontale Ausrichtung der ersten Transferplattform minimiert das Risiko des Kippens der Behälter während der Manipulation durch den Einlaufmanipulator und die im Folgenden beschriebene Transferfördereinrichtung.

Die Palettenoberfläche jeder Transferpalette weist erfindungsgemäß eine Vielzahl stegartiger Erhöhungen auf, die eine Aufstandsfläche für den wenigstens einen Behälter bilden. Dabei sind die stegartigen Erhöhungen parallel zueinander ausgerichtet, sodass sich ein kammförmiger Querschnitt der Transferpaletten senkrecht zur Bewegungsrichtung ergibt. Die stegartigen Erhöhungen können dabei sämtlich dieselbe Höhe haben, sodass ihre Oberkanten eine ebene Aufstandsfläche für den wenigstens einen Behälter bilden. Es können jedoch auch einzelne der Vielzahl der stegartigen Erhöhungen eine größere Höhe haben, wobei diese höheren Erhöhungen den transportierten Behältern Seitenstabilität verleihen können. Um eine einfache Umstellung des Behälterformats zu ermöglichen, können lediglich die Erhöhungen, die die Behälterzeile oder eine Behältergruppe seitlich begrenzen, höher ausgebildet sein. Bevorzugt sind stets ausreichend viele nebeneinanderliegende Stege mit gleicher Höhe ausgebildet, sodass ein Wechsel des Behälterquerschnitts ohne weiteres möglich ist. Des Weiteren kann die Oberkante jeder Erhöhung in Längsrichtung gerade ausgebildet sein, sodass sich auch in Längsrichtung eine ebene Aufstandsfläche ergibt. Abweichend hiervon kann lediglich eine vordere und/oder hintere Kante der stegartigen Erhöhungen ausgebildet sein, die die transportierten Behälter bezüglich der Bewegungsrichtung stabilisiert. Mit Ausnahme dieser vorderen und hinteren Kanten bilden die Oberkanten der stegartigen Erhöhungen jedoch eine ebene Aufstandsfläche. Die Begriffe "vordere" und "hintere" beziehen sich hier und im Folgenden auf die übliche Bewegungsrichtung der Transferpaletten.

Entsprechend der kammförmigen Weiterbildung der Palettenoberflächen der Transferpaletten weist die erste Transferplattform erfindungsgemäß einen kammförmigen Auslaufbereich auf, der dazu ausgebildet ist, dass die stegartigen Erhöhungen der Palettenoberfläche zur Übernahme des wenigstens einen Behälters durch die Zwischenräume des kammförmigen Auslaufbereichs hindurchtreten können. Anders ausgedrückt hat der Auslaufbereich der ersten Transferplattform die Gestalt eines liegenden Kamms, wobei die Zwischenräume zwischen den parallelen Zinken dieses Kamms derart angeordnet und ausgebildet sind, dass die stegartigen Erhöhungen der Palettenoberfläche der Transferpaletten in die Zwischenräume des Auslaufbereichs passen. Somit weist die Transferplattform einen Auslaufbereich auf, der die Struktur eines horizontal ausgerichteten Kamms hat. Die Breite des kammförmigen Auslaufbereichs, d.h. dessen Ausdehnung in Bewegungsrichtung der Transferpaletten, entspricht mindestens dem maximalen Behälterdurchmesser, der von der Vorrichtung zu gruppierenden Behälterformate. Die Ausdehnung des kammförmigen Auslaufbereichs senkrecht zur Bewegungsrichtung kann ungefähr der entsprechenden Ausdehnung der Palettenoberflächen entsprechen. Es ist jedoch auch denkbar, dass mehrere Transferpaletten nebeneinander von entsprechenden Transferfördereinrichtungen bewegt werden, sodass eine oder mehrere Behälterzeilen, die auf dem kammförmigen Auslaufbereich bereitgestellt werden, von einer Reihe nebeneinander bewegter Transferpaletten übernommen wird. In diesem Fall ist die Ausdehnung des kammförmigen Auslaufbereichs senkrecht zur Bewegungsrichtung um ein Vielfaches größer als die entsprechende Ausdehnung der einzelnen Transferpaletten.

Die Vorrichtung umfasst weiterhin eine Transferfördereinrichtung mit einem Langstator-Linearmotorantrieb, die dazu ausgebildet ist, die Transferpaletten einzeln und unabhängig voneinander entlang einer geschlossenen Transportbahn zu bewegen, wobei die erste Transfervorrichtung derart an der Transportbahn angeordnet ist und die Transferfördereinrichtung und die Vielzahl der Transferpaletten derart ausgebildet sind, dass die stegartigen Erhöhungen der Palettenoberfläche der Transferpaletten beim Passieren der ersten Transferplattform durch die Zwischenräume des kammförmigen Auslaufbereichs hindurchtreten.

Erfindungsgemäss umfasst die Transferfördereinrichtung somit neben der Vielzahl von Transferpaletten einen oder mehrere entsprechende Antriebe, mittels derer die Transferpaletten entlang der geschlossenen Transportbahn umlaufend bewegt werden. Die Transferfördereinrichtung weist einen oder mehrere Langstator-Linearmotorantriebe auf, mittels derer die Transferpaletten einzeln und unabhängig voneinander, d.h. mit individuellen Weg-Zeit-Profilen, entlang der Transportbahn bewegt werden. Auf diese Weise können die Transferpaletten gezielt im Bereich des kammförmigen Auslaufbereichs bewegt werden, um eine oder mehrere dort bereitgestellte Behälterzeilen auf der Palettenoberfläche zu übernehmen. Anschließend werden die übernommenen Behälter mittels der Transferpaletten zu einer Abgabestelle der Transportbahn, wie sie weiter unten im Detail beschrieben ist, transportiert. Dabei kann aufgrund der individuellen Weg-Zeit-Profile der Bewegung der Transferpaletten eine gewünschte Pufferfunktion der Transferfördereinrichtung realisiert werden. Diese ist nunmehr unabhängig von dem Takt des Einlaufmanipulators und lediglich durch die Länge der Transferfördereinrichtung sowie die Anzahl der Transferpaletten begrenzt.

Transportsysteme mit Langstator-Linearmotorantrieb sind im Stand der Technik wohl bekannt. Allen Transportsystemen mit Langstator-Linearmotorantrieb ist gemein, dass speziell dazu ausgebildete Transportelemente, hier die Transferpaletten, über magnetische Wechselwirkung mit dem oder den Langstatoren bzw. Linearmotorsträngen eines oder mehrerer Linearmotoren entlang einer oder mehrerer Führungsschienen der Transportbahn bewegt werden. Die Transportelemente sind dabei bewegbar an der oder den Führungsschienen gelagert, wobei insbesondere Rollen als reibungsarme Lagerelemente eingesetzt werden können.

Bei der erfindungsgemässen Verwendung eines Langstator-Linearmotorantriebs zum Bewegen der Transferpaletten der Transferfördereinrichtung sind also die Transportelemente, insbesondere die Transferpaletten, und die Transportbahn derart ausgebildet, dass die Transportelemente mittels einer magnetischen Kraft in Wechselwirkung mit der Transportbahn bewegt werden können. Die Transportbahn ist hierzu mit einem magnetischen Linearantrieb mit einem oder mehreren Langstatoren, zum Beispiel in Form eines synchronen oder asynchronen Linearmotors, ausgestattet. Dazu werden die Langstatoren mit einer Vielzahl von elektrischen Wicklungen in Form von einzeln ansteuerbaren Elektromagneten ausgerüstet. Um eine magnetische Wechselwirkung zwischen dem Transportelement und den einzeln ansteuerbaren Elektromagneten der Langstatoren zu erzeugen, ist das Sekundärteil jedes Transportelements im Allgemeinen mit einem oder mehreren Permanentmagneten bzw. nicht schaltenden Elektromagneten und/oder Eisenkernen ausgestattet.

Bei der erfindungsgemässen Ausgestaltung der Transferfördereinrichtung mit einem Langstator-Linearmotorantrieb kann jede Transferpalette selbst über ein solches Sekundärteil verfügen. Alternativ können separat ausgebildete Läufer mit entsprechenden Sekundärteilen vorgesehen sein, die die bewegbar an der Transportbahn gelagerten Transferpaletten antreiben, indem sie diese schieben oder ziehen. Die Läufer können hierzu mechanisch oder magnetisch mit den Transferpaletten gekoppelt werden. Die Läufer können jedoch auch fest mit den jeweiligen Transferpaletten verbunden sein. Insbesondere kann die Transferfördereinrichtung für jede Transferpalette je wenigstens einen Läufer des Langstator-Linearmotorantriebs aufweisen. Um eine stärkere Vortriebskraft zu ermöglichen oder wie unten genauer beschrieben eine Höhenverstellung der Palettenoberfläche zu erlauben, können insbesondere 2 oder mehr unabhängig voneinander bewegbare Läufer einer jeweiligen Transferpalette zugeordnet sein. Die Bewegung der Transferpaletten, insbesondere der diesen zugeordneten Läufer, kann von einer Steuer- und/oder Regeleinrichtung der Transferfördereinrichtung, beispielsweise durch eine zentrale Steuereinheit und/oder durch dezentral an den Transportelementen angeordnete Steuereinheiten realisiert werden. Die eine oder mehreren Steuereinheiten steuern und/oder regeln dabei wie an sich bekannt die elektrischen Wicklungen der Langstatoren in Abhängigkeit von dem gewünschten Bewegungsprofil der Transferpaletten. Es versteht sich, dass die Transferfördereinrichtung mehrere, parallel zueinander angeordnete Transportbahnen mit jeweils entsprechenden Langstatoren aufweisen kann, um mehrere Transferpaletten nebeneinander und unabhängig voneinander bewegen zu können. Auf diese Weise kann eine von dem Einlaufmanipulator bereitgestellte Behälterzeile in einzelne Gruppen von Behältern aufgeteilt werden, die jeweiligen Transferpaletten zugeordnet sind.

Bevorzugt kann die Transportbahn der Transferfördereinrichtung derart ausgebildet sein, dass die Transferpaletten zum Transport der Behälter entlang eines oberen Teils der Transportbahn bewegt werden, während die leeren Transferpaletten entlang eines unteren Teils der Transportbahn zurückgeführt werden. Eine solche Weiterbildung der Transportbahn ist besonders kompakt. Es versteht sich jedoch, dass auch alternative Weiterbildungen der Transportbahn möglich sind, insbesondere in Kombination mit den weiter unten beschriebenen Weiterbildungen zur Übernahme bzw. Übergabe der Behälter mittels der Palettenoberflächen von den kammförmigen Bereichen. Des Weiteren kann die Transferfördereinrichtung, insbesondere die Transportbahn, quer zu einer Bewegungsrichtung der Behälter im Einlaufstrom ausgerichtet sein, und beispielsweise den Einlaufstrom und einen Auslaufstrom für Behältergebinde senkrecht miteinander verbinden. Die vorliegende Weiterbildung ist jedoch nicht auf eine solche senkrechte Anordnung der Transportbahn beschränkt, sondern kann beliebige Ausrichtungen der Transportbahn umfassen, solange die Transferpaletten im Bereich der ersten und zweiten Transferplattform derart bewegt werden, dass die stegartigen Erhöhungen der Palettenoberflächen durch die kammförmigen Auslauf- und Einlaufbereiche der Transferplattformen hindurchtreten können. Somit sind die Transportbahn, und damit entsprechende Führungsschienen und Langstatoren, im Bereich der kammförmigen Auslauf- und Einlaufbereiche der Transferplattformen in der Projektion in die Horizontalebene parallel zu den Zinken der jeweiligen Kämme ausgerichtet.

Eine Vorderkante des kammförmigen Auslaufbereichs der ersten Transferplattform kann insbesondere senkrecht zur Bewegungsrichtung der Transferpaletten beim Passieren der ersten Transferplattform ausgerichtet sein. Der Einlaufmanipulator kann zudem derart ausgebildet sein bzw. angesteuert werden, dass er Behälter unabhängig vom Behälterdurchmesser mit deren Vorderkante stets an derselben Stelle des kammförmigen Auslaufbereichs, insbesondere an der Vorderkante des Auslaufbereichs, bereitstellt. Bei Bereitstellung mehrerer Behälterzeilen gilt dies selbstverständlich nur für die vorderste Behälterzeile.

Gemäß dieser Weiterbildung treten die stegartigen Erhöhungen der Palettenoberfläche der Transferpaletten beim Passieren der ersten Transferplattform durch die Zwischenräume des kammförmigen Auslaufbereichs hindurch, um die auf der Transferplattform bereitgestellten Behälter zu übernehmen. Anders ausgedrückt vollführen die Transferpaletten, und damit deren Palettenoberflächen, bei der Vorbeifahrt an der ersten Transferplattform eine schräg nach oben gerichtete Bewegung, die die stegartigen Erhöhungen der Palettenoberflächen in die Zwischenräume des kammförmigen Auslaufbereichs einfährt und soweit anhebt, dass die Oberkante der stegartigen Erhöhungen über die Oberfläche der Transferplattform tritt. Ein ursprünglich auf der Transferplattform stehender Behälter wird somit durch die stegartigen Erhöhungen der Palettenoberfläche von der Transferplattform abgehoben und dadurch von der Transferpalette übernommen.

Gemäß einer speziellen Weiterbildung können die Transferfördereinrichtung und die Vielzahl der Transferpaletten derart ausgebildet sein, dass die Palettenoberfläche der Transferpaletten beim Durchtritt durch den kammförmigen Auslaufbereich im Wesentlichen horizontal ausgerichtet ist. Diese im Wesentlichen horizontale Ausrichtung der Palettenoberfläche kann, wie unten anhand anschaulicher Weiterbildungen beschrieben, durch spezielle Ausbildung der Führungsschienen der Transferfördereinrichtung und/oder der Transferpaletten, insbesondere deren Lagerung an den Führungsschienen, bewirkt werden. Im Wesentlichen horizontal ist hier und im Folgenden wie bereits erwähnt als innerhalb einer maximalen Abweichung von 5°, bevorzugt 2°, noch bevorzugter 1° von der Horizontalebene zu verstehen. Da die Palettenoberfläche beim Durchtritt durch den kammförmigen Auslaufbereich horizontal ausgerichtet ist, können die auf dem Auslaufbereich bereitgestellten Behälter ohne Gefahr des Umfallens übernommen werden. Des Weiteren bewirkt die horizontale Ausrichtung der Palettenoberfläche, dass die Palettenoberfläche als Gesamtes durch die Zwischenräume und über die Oberfläche der Transferplattform tritt. Auf diese Weise werden mehrere hintereinander bereitgestellte Behälterzeilen gleichzeitig von der Transferpalette übernommen.

Insbesondere kann jede Transferpalette wenigstens ein vorderes Rollenpaar und wenigstens ein hinteres Rollenpaar aufweisen, wobei das vordere Rollenpaar und das hintere Rollenpaar an verschiedenen Schienenpaaren der Transportbahn gelagert sind, und wobei eine relative Anordnung des vorderen und des hinteren Rollenpaares bezüglich der Palettenoberfläche und bezüglich der Schienenpaare derart gewählt ist, dass die Palettenoberfläche beim Durchtritt durch den kammförmigen Auslaufbereich im Wesentlichen horizontal ausgerichtet ist. Die Transportbahn, und damit die Transferfördereinrichtung, weist somit mindestens zwei Paare von Führungsschienen auf, an denen die Transferpaletten mit separaten Rollenpaaren bewegbar gelagert sind. Ein Schienenpaar ist hier und im Folgenden als Paar sich entsprechender Führungsschienen zu verstehen, die insbesondere entlang der Transportbahn parallel geführt werden.

Wegen ihrer räumlichen Beabstandung in Bewegungsrichtung der Transferpalette ermöglicht das Vorhandensein des wenigstens einen vorderen Rollenpaares und des wenigstens einen hinteren Rollenpaares, dass die Geometrien der vorderen und hinteren Rollenpaare in Bezug auf die Palettenoberfläche und der Schienenpaare derart gewählt werden können, dass die Palettenoberfläche während der oben erwähnten Schrägfahrt durch den kammförmigen Auslaufbereich im Wesentlichen horizontal ausgerichtet ist.

Beispielsweise können die Schienenpaare zum Durchtritt der Palettenoberfläche durch den kammförmigen Auslaufbereich einen vertikal versetzten, parallelen Abschnitt aufweisen. Somit laufen das wenigstens eine vordere Rollenpaar und das wenigstens eine hintere Rollenpaar auf vertikal versetzten, abschnittsweise parallel verlaufenden Führungsschienen im Bereich des kammförmigen Auslaufbereichs.

Zusätzlich können die Schienenpaare auch in einem Abschnitt anschließend an den Durchtritt der Palettenoberfläche durch den kammförmigen Auslaufbereich vertikal versetzt angeordnet sein. Dies ist insbesondere dann der Fall, wenn die Rollen des vorderen Rollenpaares einen anderen Abstand von der Palettenoberfläche aufweisen als die Rollen des hinteren Rollenpaares. Auf diese Weise bleibt die Palettenoberfläche auch nach Durchtritt durch den kammförmigen Auslaufbereich bzw. Übernahme der Behälter horizontal ausgerichtet, sodass die Gefahr des Umfallens während des Transports zur Abgabestelle minimiert wird.

Die Schienenpaare können zusätzlich horizontal versetzt zueinander angeordnet sein. Insbesondere kann ein inneres Schienenpaar und ein äußeres Schienenpaar vorgesehen sein, an denen die vorderen Rollen bzw. die hinteren Rollen gelagert sind. Horizontal versetzt zueinander angeordnete Schienenpaare gestatten es, dass die Schienen der Transportbahn nach Durchtritt der Palettenoberfläche durch den kammförmigen Auslaufbereich horizontal verlaufen. In diesem Fall haben die Rollen des vorderen Rollenpaares und die Rollen des hinteren Rollenpaares denselben Abstand von der Palettenoberfläche.

Gemäß einer alternativen Weiterbildung kann jede Transferpalette wenigstens zwei vordere Rollenpaare und/oder wenigstens zwei hintere Rollenpaare aufweisen, die jeweils, insbesondere mittels des Langstator-Linearmotorantriebs, individuell gesteuert bewegbar an einem Schienenpaar der Transportbahn gelagert sind, wobei die Transferpalette derart ausgebildet ist, dass durch Veränderung des Abstands zwischen aufeinanderfolgenden vorderen Rollenpaaren und/oder zwischen aufeinanderfolgenden hinteren Rollenpaaren eine Stellung der Palettenoberfläche bezüglich der Horizontalen verändert werden kann. Dies kann beispielsweise durch Anbindung der vorderen und/oder hinteren Rollenpaare über ein jeweiliges Scherengelenk an einen höhenverstellbaren Teil der Transferpalette, der die Palettenoberfläche umfasst, bewirkt werden. Die Veränderung des Abstands zwischen aufeinanderfolgenden Rollenpaaren in Bewegungsrichtung der Transferpalette kann mittels eines Motors, insbesondere eines Servomotors, erreicht werden, der in Abhängigkeit von der Position der Transferpalette bezüglich der ersten Transferplattform von einer Steuer- und/oder Regeleinheit gesteuert wird. Alternativ können die aufeinanderfolgenden Rollenpaare separaten Läufern zugeordnet sein, oder zumindest mit eigenen Sekundärteilen ausgestattet sein, die eine individuelle Bewegung der Rollenpaare aufeinander zu oder voneinander weg mittels des Langstator-Linearmotorantriebs gestatten. Durch Variation des Abstandes zwischen den aufeinanderfolgenden Rollenpaaren lässt sich somit die Palettenoberfläche gezielt bezüglich der Bewegungsrichtung der Transferpaletten verkippen, wodurch insbesondere eine Schrägfahrt der Palettenoberfläche im Bereich des kammförmigen Auslaufbereichs bewirkt werden kann.

Sind sowohl wenigstens zwei vordere Rollenpaare als auch wenigstens zwei hintere Rollenpaare vorgesehen, so kann die Höhe der Palettenoberfläche über einer horizontal ausgerichteten Transportbahn, d.h. horizontal ausgerichteten Führungsschienen, flexibel angepasst werden, um den Durchtritt der Palettenoberfläche durch den kammförmigen Auslaufbereich zu bewirken. Bei dieser speziellen Weiterbildung ist es sogar möglich, mittels geeigneter Steuerung und/oder Regelung des Langstator-Linearmotorantriebs die Stelle auf der Palettenoberfläche, an der der wenigstens eine übernommene Behälter zu stehen kommt, flexibel zu variieren. Dies gestattet es, auch bei feststehendem, kammförmigen Einlaufbereich der zweiten Transferplattform einzeln übernommene Behälterzeilen derart abzusetzen, dass mehrere Behälterzeilen zusammengefasst werden.

Es versteht sich, dass anstelle von oder ergänzend zu den Rollen auch andere Lagerelemente, beispielsweise Führungsstifte oder Gleitlager, eingesetzt werden können, um die Bewegung der Transferpaletten und insbesondere von deren Palettenoberflächen umzusetzen. Die Lagerelemente sind dabei an entsprechenden Führungselementen der Transportbahn, beispielsweise Führungsschienen, Führungskanälen oder Führungskulissen, bewegbar gelagert.

Die Vorrichtung kann weiterhin eine zweite Transfervorrichtung mit einer zweiten Transferplattform mit einem kammförmigen Einlaufbereich umfassen, wobei der kammförmige Einlaufbereich derart ausgebildet und an der Transportbahn angeordnet ist, dass die stegartigen Erhöhungen der Palettenoberfläche der Transferpaletten zur Übergabe des wenigstens einen Behälters in die Zwischenräume des kammförmigen Einlaufbereichs eintreten können, und wobei die Transferfördereinrichtung derart ausgebildet ist, dass die stegartigen Erhöhungen der Palettenoberfläche der Transferpaletten beim Passieren des kammförmigen Einlaufbereichs zur Übergabe des wenigstens einen Behälters unter eine Oberfläche der zweiten Transferplattform absinken. Die zweite Transfervorrichtung ist dazu ausgebildet, Behälter von der Transferfördereinrichtung zu übernehmen.

Die zweite Transfervorrichtung kann somit analog zur ersten Transfervorrichtung ausgebildet sein, wobei die Zinken des kammförmigen Einlaufbereichs gegen die Bewegungsrichtung der Transferpaletten ausgerichtet sind. Entsprechend erfolgt die Schrägfahrt der Palettenoberfläche der Transferpaletten beim Passieren des kammförmigen Einlaufbereichs schräg nach unten, um die transportierten Behälter auf die Oberfläche der zweiten Transferplattform abzusetzen. Ansonsten sind dieselben Weiterbildungen und Variationen der ersten Transfervorrichtung, insbesondere bezüglich der Ausbildung der zweiten Transferplattform sowie der Schienenpaare und Rollenlager der Transferpaletten, entsprechend auf die zweite Transfervorrichtung anwendbar. Auch die zweite Transferplattform, insbesondere der kammförmige Einlaufbereich, kann im Wesentlichen horizontal ausgerichtet sein, um ein Umfallen der Behälter bei der Übergabe zu vermeiden.

Gemäß einer speziellen Weiterbildung kann zumindest der kammförmige Einlaufbereich der zweiten Transferplattform in Bewegungsrichtung der Transferpaletten verfahrbar ausgebildet sein. Beispielsweise kann die zweite Transferplattform mittels Rollen an Führungsschienen derart bewegbar gelagert sein, dass die Vorderkante des kammförmigen Einlaufbereichs in Bewegungsrichtung hin- und hergefahren werden kann. Dadurch lässt sich die Stelle, an der von den Transferpaletten mitgeführte Behälter abgesetzt werden, variieren. Auf diese Weise können einzeln von den Transferpaletten zugeführte Behälterzeilen dicht an dicht auf der zweiten Transferplattform abgestellt werden. Alternativ oder ergänzend können die Transferpaletten wie oben beschrieben wenigstens zwei vordere Rollenpaare und wenigstens zwei hintere Rollenpaare aufweisen, deren gesteuerte Abstandsveränderung ein Abstellen der mitgeführten Behälter an einer gewünschten Stelle des kammförmigen Einlaufbereichs ermöglicht.

Die zweite Transfervorrichtung kann weiterhin einen Auslaufmanipulator aufweisen, der dazu ausgebildet ist, Behälter gruppenweise von der zweiten Transferplattform an einen Abförderer zu übergeben. Hierbei können dieselben Variationen und Weiterbildungen, die oben im Zusammenhang mit dem Einlaufmanipulator beschrieben wurden, auch auf den Auslaufmanipulator angewendet werden. Insbesondere kann der Auslaufmanipulator ein Linearachsenportalsystem gemäß der obigen Beschreibung umfassen, wobei geeignet ausgebildete Schiebeelemente oder Greifelemente vorgesehen sein können, mit denen die Behältergruppen an den Abförderer übergeben werden können. Der Auslaufmanipulator kann mittels der Steuer- und/oder Regeleinheit derart gesteuert werden, dass erst nach Bereitstellen einer gewünschten Anzahl von Behälterreihen auf der zweiten Transferplattform eine Manipulation der Gruppe von Behälterreihen eingeleitet wird. Der Abförderer kann beispielsweise ein Transportband umfassen.

Alternativ zur Abgabe der mitgeführten Behälter an die zweite Transfervorrichtung können die Transferpaletten im beladenen Zustand an ein fahrerloses Transportsystem (FTS) oder Automated Guided Vehicle (AGV) weitergeleitet werden. Fahrerlose Transportsysteme sind im Stand der Technik allgemein bekannt, sodass hier auf eine detaillierte Beschreibung verzichtet wird. Die Fördermittel des fahrerlosen Transportsystems sind im Allgemeinen mit einem eigenen Fahrantrieb ausgestattet und werden automatisch gesteuert und berührungslos geführt. Die von einem FTS übernommenen Paletten können zur weiteren Behandlung, beispielsweise zur Kommissionierung und/oder Verpackung, einer weiteren Behandlungsstation zugeführt werden. Die FTS können derart ausgebildet sein, dass sie Transferpaletten in mehreren vertikalen übereinander angeordneten Ebenen übernehmen können. Hierzu können die FTS eine Höhenverstellung aufweisen. Alternativ kann die Transferfördereinrichtung Weichen zum gezielten Ausschleusen einzelner Transferpaletten auf Nebenstrecken aufweisen, die die Transferpaletten in eine höher gelegene Ebene transportieren. Die FTS können somit auch dazu eingesetzt werden, Transferpaletten sowie die von ihnen transportierten Behälter zu speichern. Leere Transferpaletten können von den FTS gleichzeitig oder zeitlich versetzt in derselben oder einer anderen Ebene an die Transferfördereinrichtung zurückgegeben werden. Auf diese Weise wird ein Leerlaufen der Transferfördereinrichtung vermieden.

Um eine möglichst einfache Übergabe von Transferpaletten an die FTS zu ermöglichen, können die Transferpaletten von den Läufern der Transferfördereinrichtung entkoppelt werden. Alternativ können die Transferpaletten inklusive der Läufer an die FTS übergeben werden.

Die oben genannten Aufgaben werden auch durch die Verwendung einer der oben beschriebenen Vorrichtungen zum Gruppieren von Behältern gelöst, wobei die Verwendung umfasst: Überführen wenigstens einer Behälterzeile von dem Zuförderer auf die erste Transferplattform mittels des Einlaufmanipulators, Übernahme der wenigstens einen Behälterzeile von der ersten Transferplattform mittels einer Transferpalette durch Hindurchtreten der stegartigen Erhöhungen der Palettenoberfläche durch den kammförmigen Auslaufbereich der ersten Transferplattform, wobei die wenigstens eine Behälterzeile insbesondere derart übernommen wird, dass die Behälterzeile an einer Vorderkante der Palettenoberfläche ausgerichtet ist, und Übergabe der wenigstens einen Behälterzeile an die zweite Transferplattform mittels der Transferpalette durch Absinken der stegartigen Erhöhungen der Palettenoberfläche durch den kammförmigen Einlaufbereich der zweiten Transferplattform. Das Überführen der wenigstens einen Behälterzeile mittels des Einlaufmanipulators kann wie oben beschrieben mithilfe geeigneter Schiebeelemente oder Greifelemente des Einlaufmanipulators erfolgen.

Die Transferfördereinrichtung und die Vielzahl der Transferpaletten können wie oben beschrieben derart ausgebildet sein, dass die wenigstens eine Behälterzeile derart übernommen wird, dass die Behälterzeile an einer Vorderkante der Palettenoberfläche ausgerichtet ist. Falls die stegartigen Erhöhungen der Transferpaletten eine vordere Kante aufweisen, kann die wenigstens eine Behälterzeile an einer rückwärtigen Flanke bezüglich der Bewegungsrichtung der Transferpaletten ausgerichtet sein. Hierzu kann die rückwärtige Flanke entsprechend der Schrägfahrt der Palettenoberfläche bei der Übernahme der Behälterzeile geneigt sein. Eine in Bewegungsrichtung vordere Flanke der vorderen Kante kann hingegen senkrecht zur Palettenoberfläche ausgebildet sein, um beim Einfahren in den kammförmigen Einlaufbereich der zweiten Transferplattform eine dort bereits abgestellte Behälterzeile in Bewegungsrichtung weiter zu schieben. Auf diese Weise kann durch die Bewegung der Transferpalette Raum auf der zweiten Transferplattform für eine oder mehrere weitere Behälterzeilen geschaffen werden.

Die wenigstens eine Behälterzeile kann auch mit einer hinteren Kante der stegartigen Erhöhungen abschließen, wobei die hintere Kante bei der Übernahme der Behälterzeile von der ersten Transferplattform stabilisierend gegen Umfallen der Behälter wirkt. Bei der Übergabe der Behälterzeile an die zweite Transferplattform kann die hintere Kante bewirken, dass die Behälterzeile weiter in Bewegungsrichtung über die zweite Transferplattform geschoben wird. Auch auf diese Weise kann Raum für nachfolgende Behälterzeilen geschaffen werden.

Gemäß einer Weiterbildung kann die Verwendung der beschriebenen Vorrichtungen weiterhin ein vorübergehendes Puffern einer Vielzahl von Behälterzeilen mittels der Vielzahl von Transferpaletten der Transferfördereinrichtung umfassen. Durch den Einsatz des Langstator-Linearmotorantriebs als Teil der Transferfördereinrichtung können die mit Behältern beladenen Transferpaletten mit variablen Weg-Zeit-Profilen entlang der Transportstrecke der Transferfördereinrichtung bewegt werden. Durch entsprechendes Verzögern und Gruppenbildung der Transferpaletten lässt sich dabei eine Pufferfunktion der Transferfördereinrichtung realisieren, die mögliche Störungen in vorgeschalteten und/oder nachgeschalteten Behandlungsstationen ausgleichen kann.

Die beschriebenen Vorrichtungen zum Gruppieren von Behältern ermöglichen es, die Manipulatoren im Ein- und Auslauf mit jeweils nur einer Anfahrposition zu steuern. Da die Übergabe sowie die Abnahme der Behälter durch die Manipulatoren auf einer ruhenden Oberfläche der jeweiligen Transferplattform erfolgt, können die Taktzeiten der Ein- und Auslaufmanipulatoren verkürzt werden. Anders als bei der Übergabe bzw. Abnahme an bzw. von einem angetriebenen Transportband besteht bei der beschriebenen Manipulation der Behälter nur eine geringe Gefahr des Umfallens.

Die Pufferfunktion der beschriebenen Vorrichtungen erfolgt annähernd unabhängig von den Ein- und Auslaufsystemen, bzw. Manipulatoren. Nur der Wechsel der Transferpaletten geht in die Taktzeit ein. Aus diesem Grund kann ein kompakteres System gebaut werden. Die Transferpaletten können aufgrund der Verwendung eines Langstator-Linearmotorantriebs unabhängig voneinander bewegt und angesteuert werden. Die Transferpaletten können dadurch mit einem Manipulator mitbewegt werden, beispielsweise beim Einlauf, wo die Transferpaletten synchron zum Einlaufmanipulator unabhängig von den restlichen Palettenbewegungen bewegt werden können. Dadurch kann eine ungünstige Beschleunigung der zu übernehmenden Behälter bei der Übernahme an dem kammförmigen Auslaufbereich vermieden werden. Die Palettenbreite in Bewegungsrichtung kann derart gewählt werden, dass eine Vielzahl unterschiedlicher Behälterformate transportiert werden können. Darüber hinaus ist der Behältertransport mittels Transferpaletten drucklos und somit behälterschonend. Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 zeigt eine beispielhafte Ausführungsform einer Vorrichtung zum Gruppieren von Behältern gemäß der vorliegenden Erfindung in perspektivischer Darstellung.
Figuren 2a, 2b und 2c stellen eine Transfervorrichtung mit einem Einlaufmanipulator gemäß der vorliegenden Erfindung dar.
Figuren 3a und 3b zeigen eine Transferfördereinrichtung mit einer Vielzahl von Transferpaletten in Seitenansicht und Draufsicht.
Figur 4 zeigt schematisch die Übernahme eines Behälters von der ersten Transferplattform mit einem Schienensystem gemäß einer ersten Weiterbildung.
Figur 5 zeigt eine Transferpalette mit zugeordnetem Läufer in einer Seitenansicht.
Figur 6 zeigt die Transferpalette der Figur 5 in einer Rückansicht.
Figur 7 zeigt die Rollenpaare einer Transferpalette und Schienenpaare der Transferfördereinrichtung in einer Draufsicht.
Figur 8 zeigt einen Läufer inklusive zugehörigem Schienenpaar in einer Draufsicht.
Figur 9 zeigt Transferpaletten mit einem zugehörigen Schienensystem gemäß einer zweiten Weiterbildung.
Figur 10 zeigt Transferpaletten mit einem zugehörigen Schienensystem gemäß einer dritten Weiterbildung.
Figur 11 zeigt Transferpaletten mit einem zugehörigen Schienensystem gemäß einer vierten Weiterbildung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

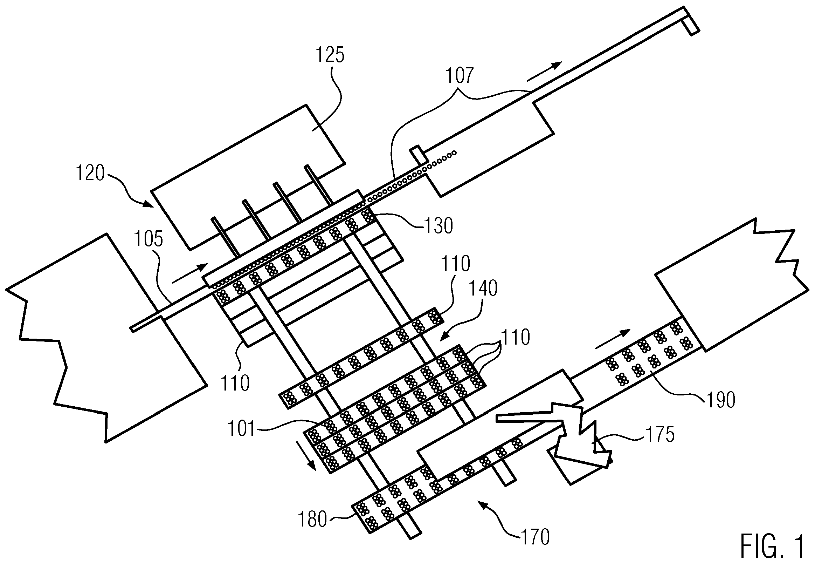

Die Figur 1 zeigt eine beispielhafte Ausführungsform einer Vorrichtung zum Gruppieren von Behältern gemäß der vorliegenden Erfindung in perspektivischer Darstellung. Von einem lediglich schematisch dargestellten Teil einer Behälterbehandlungsanlagewerden die Behälter mittels eines als Transportband ausgebildeten Zuförderers 105 in den Bereich der ersten Transfervorrichtung 120 gefördert. Die erste Transfervorrichtung 120 weist einen Einlaufmanipulator 125 mit einem Linearachsenportalsystem auf, der die einlaufenden Behälter gezielt von dem Transportband des Zuförderers 105 auf die erste Transferplattform 130 schiebt, die in der Figur 1 lediglich schematisch dargestellt ist. Wie nachfolgend genauer beschrieben kann der Einlaufmanipulator 125 derart ausgebildet sein, dass er gezielt als fehlerhaft erkannte Behälter passieren lässt, d.h. lediglich fehlerfreie Behälter auf die erste Transferplattform 130 schiebt. Die fehlerhaften Behälter werden gemäß der dargestellten Weiterbildung mit einem Abförderer 107 zur weiteren Verarbeitung bzw. zum Recycling abgefördert.

Die Figur 1 zeigt weiterhin lediglich schematisch einen nachgeschalteten Teil der Behälterbehandlungsanlage, dem die gruppierten Behälter, hier als Gebinde, mittels des Abförderers 190 zugefördert werden. Auch der Abförderer 190 kann mit einem Transportband ausgebildet sein. Im nachgeschalteten Teil der Behälterbehandlungsanlage können die Gebinde kommissioniert und zum Versand auf Paletten verpackt werden.

Zwischen dem Zuförderer 105 und dem Abförderer 190 ist gemäß der dargestellten, nicht limitierenden Weiterbildung eine senkrecht zum Einlaufstrom und Auslaufstrom der Behälter ausgerichtete Transferfördereinrichtung 140 angeordnet, die die von dem Einlaufmanipulator 125 auf die erste Transferplattform 130 geschobenen Behälterzeilen mittels einer Vielzahl von Transferpaletten 110 übernimmt und zu einer zweiten Transfervorrichtung 170 transportiert. Exemplarisch ist in der Figur 1 eine Behältergruppe 101 auf einer Transferpalette 110 gezeigt, wie sie von dem Einlaufmanipulator 125 auf der ersten Transferplattform 130 bereitgestellt werden kann. Es versteht sich jedoch, dass auch durchgehende Behälterzeilen auf den Transferpaletten 110 befördert werden können.

Die Transferfördereinrichtung 140 der Figur 1 ist mit einer in der vertikalen Ebene geschlossen gebildeten Transportbahn ausgebildet, wobei die Transferpaletten 110 entlang des oberen Teils der Transportbahn beladen fahren und entlang des unteren Teils der Transportbahn leer zurückgeführt werden. Eine Vielzahl von Transferpaletten ist im Zulauf zur ersten Transfervorrichtung 120 als Puffer vorgehalten. Die Figur 1 zeigt weiterhin, dass aufgrund der individuellen Weg-Zeit-Profile der Transferpaletten, die mittels des eingesetzten Langstator-Linearmotorantriebs erzielt werden, eine Pufferung von gruppierten Behältern durch Engführung der Transferpaletten auf dem Weg zur zweiten Transfervorrichtung 170 möglich ist.

Entsprechend der ersten Transferplattform 130 weist gemäß der dargestellten Weiterbildung auch die zweite Transfervorrichtung 170 eine zweite Transferplattform 180 auf, auf der die von den Transferpaletten 110 mitgeführten Behälter abgestellt werden. Von der zweiten Transferplattform 180 übernimmt ein Auslaufmanipulator 175, hier mit Greifelementen dargestellt, die gruppierten Behälter und überträgt sie auf den Abförderer 190.

Wegen der Pufferfunktion der Transferfördereinrichtung 140 können die Takte der Ein- und Auslaufmanipulatoren von der Beförderung der Transferpaletten 110 im Wesentlichen entkoppelt werden.

Alternativ zur dargestellten zweiten Transfervorrichtung können die Transferpaletten von einem fahrerlosen Transportsystem (FTS) oder Automated Guided Vehicle (AGV) abgeholt werden. Das FTS/AGV kann beispielsweise die Transferpaletten in mehreren Ebenen übernehmen und speichern, und es kann zeitgleich oder zeitlich versetzt die Transferfördereinrichtung 140 mit leeren Transferpaletten beliefern.

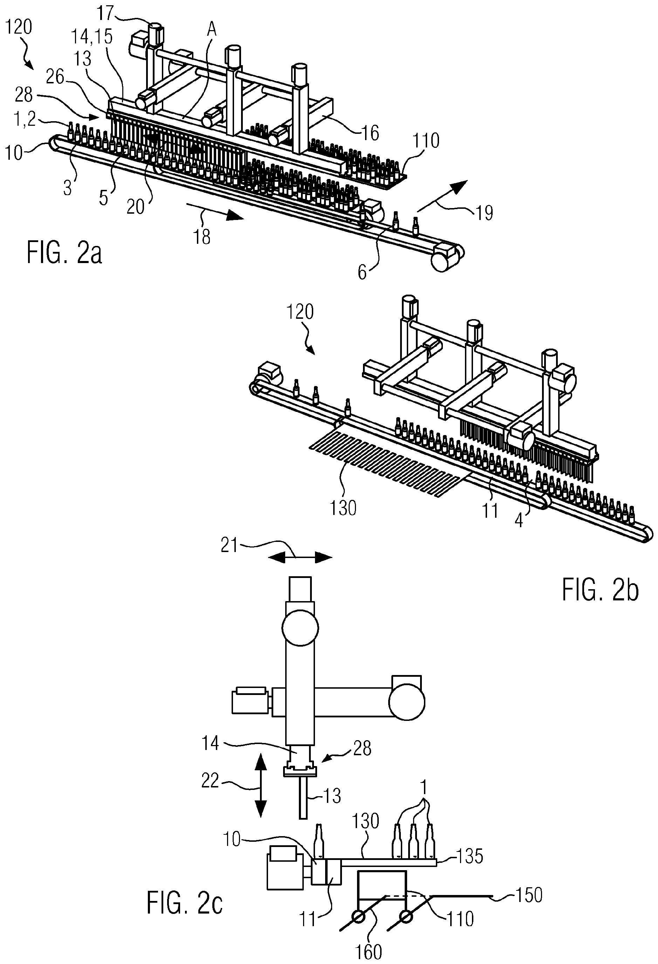

Die Figuren 2a, 2b und 2c stellen eine beispielhafte Transfervorrichtung mit einem Einlaufmanipulator gemäß der vorliegenden Erfindung dar. Es versteht sich jedoch, dass auch andere, an sich bekannte Einlaufmanipulatoren in Kombination mit der erfindungsgemäßen Transferfördereinrichtung zum Einsatz gelangen können.

Die Transfervorrichtung 120 umfasst gemäß der dargestellten Weiterbildung ein erstes Transportband in Form eines Einlaufbands 10, auf dem Behälter 1 eines Behälterstroms 2 zugefördert werden. Individuelle Behälter 1 sind auf dem Einlaufband durch Teilungslücken (eine Behälterteilung) 3 voneinander getrennt. Wie es in Figur 2b gezeigt ist, können größere unerwünschte Lücken 4, beispielsweise durch Verlust von Behältern, in dem Behälterstrom 2 auf dem Einlaufband 10 auftreten. Andererseits ist ein auszuleitender schadhafter Behälter in Figur 2a mit dem Bezugszeichen 5 gekennzeichnet. Das Bezugszeichen 6 in Figur 2a zeigt einen nach der im Folgenden beschriebenen Überschiebung/Gruppierung auf dem Einlaufband 10 verbleibenden und somit ausgeleiteten schadhaften Behälter. Die Behälter 1 können schlicht auf dem Einlaufband 10 stehen oder sich auf jeweiligen Transportelementen/Trägern befinden.

Weiterhin umfasst die Transfervorrichtung 120 ein zweites Transportband (Zwischenband) 11, eine Transferplattform 130 und ein über dem Einlaufband 10, dem Zwischenband 11 und der Transferplattform 130 angeordnetes Langstator-Linearmotorsystem A mit als Überschubeinrichtung 28 fungierenden beweglichen Shuttleelementen 26 mit Eingriffselementen (Paddel) 13, einem Langstator-Linearmotor 14 und einem Schienensystem 15. Die Bewegungsrichtung 20 der Shuttleelemente 26 entspricht der Förderrichtung 18. Das Zwischenband 11 kann mit derselben Geschwindigkeit wie das Einlaufband 10 und parallel zu diesem laufen, und es kann Teil des Einlaufbands 10, beispielsweise eine Verbreiterung desselben, sein oder separat von dem Einlaufband 10 ausgebildet sein.

Die Transferplattform 130 umfasst wie unten genauer beschrieben einen kammförmigen Auslaufbereich, auf den die Behälter mittels des das Langstator-Linearmotorsystem A umfassenden Einlaufmanipulators 125 geschoben werden. Behälter, wie der Behälter 6 in Figur 2a, die nicht durch die Eingriffselemente 13 manipuliert werden, verbleiben auf dem Einlaufband 10.

Das Langstator-Linearmotorsystem A des Einlaufmanipulators kann mithilfe eines Portalsystems (Y-Z-Linearachsenportalsystems) 16, 17 vertikal (in z-Richtung; siehe Bezugszeichen 22 in Figur 2c) und quer zur Laufrichtung (Transportrichtung) 18 des Einlaufbands 10, d.h. in y-Richtung 21 der Figur 2c, bewegt werden. Die Shuttleelemente 26 mit Eingriffselementen 13 sind hintereinander auf dem Schienensystem 15 angeordnet und können mithilfe des Langstator-Linearmotors 14 in oder entgegen der Transportrichtung 18 bewegt werden. Die Eingriffselemente 13 dienen der Überschiebung von ausgewählten Behältern 1 von dem Einlaufband 10 auf das Zwischenband 11 beziehungsweise den kammförmigen Auslaufbereich der Transferplattform 130.

Der Eingriff der Eingriffselemente 13 in den Behälterstrom 2 der Behälter 1 kann von oben (aus z-Richtung) und/oder senkrecht zur Transportrichtung 18 (aus y-Richtung) erfolgen, und er kann derart erfolgen, dass zunächst keine Berührung eines Behälters 1 auf dem Einlaufband 10 erfolgt. Hierzu kann das Portalsystem 16, 17 den Langstator-Linearmotor A mit den Shuttleelemente 26 entsprechend bewegen. Die Steuerung des Eingriffs kann über eine nicht gezeigte Steuerungseinrichtung der Transfervorrichtung 120 erfolgen.

Mittels des Langstator-Linearmotors A können die Eingriffselemente 13 den zu manipulierenden Behältern 1 aufsynchronisiert werden, sodass jedem zu manipulierenden Behälter 1 ein Shuttleelement 26 mit Eingriffselement 13 zugeordnet wird. Nach der Synchronisation bewegen sich die Behälter 1 auf dem Einlaufband 10 und die Shuttleelemente 26 des Langstator-Linearmotorsystems A parallel zueinander mit der gleichen Geschwindigkeit und Richtung.

Zum Überschub werden die Behälter 1 von den Eingriffselementen 13 erfasst und von dem Einlaufband 10 quer zur Transportrichtung wie durch den Pfeil 19 in Figur 2a angedeutet auf das Zwischenband 11 überschoben. Die auf das Zwischenband geschobenen Behälter können unabhängig von dem Einlaufband 10 weiter manipuliert werden. Beispielsweise können nachfolgend über das Einlaufband 10 einlaufende Behälter die auf das Zwischenband 11 überschobenen Behälter in Transportrichtung 18 überholen.

Die auf das Zwischenband 11 überschobenen Behälter können durch eine von dem Langstator-Linearmotor 14 bewirkte Bewegung der Shuttleelemente 26 ihrerseits mithilfe der Eingriffselemente 13 abgebremst werden oder entgegen der Transportrichtung 18 verschoben werden, wodurch geschlossene Behälterreihen oder Behältergruppen (gruppiert in Transportrichtung 18) auf dem Zwischenband 11 erzeugt werden können. Im Falle relativ großer Lücken 4 im Behälterstrom 2 auf dem Einlaufband 10 kann mithilfe von zwei oder mehr aufeinanderfolgenden Überschubvorgängen (Hüben) auf dem Zwischenband 11 eine geschlossene Behälterzeile erzeugt werden.

Mithilfe der Shuttleelemente 26 mit den Eingriffselementen 13 können die auf das Zwischenband 11 überschobenen Behälter weiter quer zur Transportrichtung 18 auf die Transferplattform 130 überschoben werden und zwar erfindungsgemäß soweit, dass die Behälter vollständig auf dem kammförmigen Auslaufbereich der Transferplattform stehen. Insbesondere können die Behälter bis zu einer Vorderkante des kammförmigen Auslaufbereichs vorgeschoben werden. Beispielsweise kann hierzu das Langstator-Linearmotorsystem A durch das Portalsystem 16, 17 senkrecht zur Transportrichtung 18 (x-Richtung) in y-Richtung bewegt werden. Insbesondere können in Transportrichtung 18 gruppierte Behälter von dem Zwischenband 11 auf die Transferplattform 130 überschoben werden, wie es in Figur 1 angedeutet ist, oder es kann eine in Transportrichtung 18 geschlossenen Behälterreihe 7 von dem Zwischenband 11 auf die Transferplattform 130 überschoben werden. Von der Transferplattform 130 können die Behälter wie nachfolgend beschrieben von den Transferpaletten übernommen werden.

Nachdem die Behälter von dem Zwischenband 11 auf die Transferplattform 130 überschoben worden sind, wird das Langstator-Linearmotorsystem A mit dem Langstator-Linearmotor 14, dem Schienensystem 15, den Shuttleelementen 26 mit den Eingriffselementen 13 durch das Y-Z-Linearachsenportalsystem 16, 17 vertikal (in z-Richtung) auf eine Höhe angehoben, auf der die Unterkanten der Eingriffselemente 13 über der Höhe der Oberkanten neu auf dem Einlaufband 10 einlaufender Behälter liegen, und es werden die Shuttleelemente entgegen der Transportrichtung 18 und der y-Richtung in Ausgangsposition zurückbewegt, sodass ein neuer Gruppierungsvorgang ausgeführt werden kann.

In der Figur 2c ist zudem in Seitenansicht schematisch das Schienensystem der Transferfördereinrichtung 140 mit den Schienenpaaren 150 und 160 dargestellt. Auf diesen Schienenpaaren sind die Transferpaletten 110 über separate Rollenpaare bewegbar, wobei im Bereich der Transferplattform 130 aufgrund der schrägen Anordnung der Schienenpaare eine Schrägfahrt der Transferpalette 110 derart bewirkt wird, dass die Palettenoberfläche durch die Zwischenräume des kammförmigen Auslaufbereichs 135 der Transferplattform 130 tritt.

Die in den Figuren 2a bis 2c gezeigte Transfervorrichtung 120 erlaubt eine zuverlässige gewünschte Behältergruppierung ohne Unterbrechung eines nachfolgend auf dem Einlaufband 10 angelieferten Behälterstroms. Die Transfervorrichtung 120 kann mehr als ein Einlaufband 10 und/oder Zwischenband 11 aufweisen, sodass der Transferplattform 130 wahlweise verschiedene Behältertypen zugeführt werden können. Durch die Gruppierung auf dem Zwischenband 11 können beliebig große Lücken 4 in dem Behälterstrom 2 auf dem Einlaufband 10 abgepuffert werden.

Es kann also jeweils ein Behälterstrom 2 mit relativ kleinen Teilungslücken 3 und relativ großen Lücken 4, die beispielsweise durch verlorengegangene Behälter erzeugt werden, sowie mit schadhaften Behälter 6 derart bearbeitet werden, dass schadhafte Behälter 6 auf dem Einlaufband ohne Manipulation ausgeleitet werden und gruppierte Behälterformationen auf der Transferplattform 130 bereitgestellt werden.

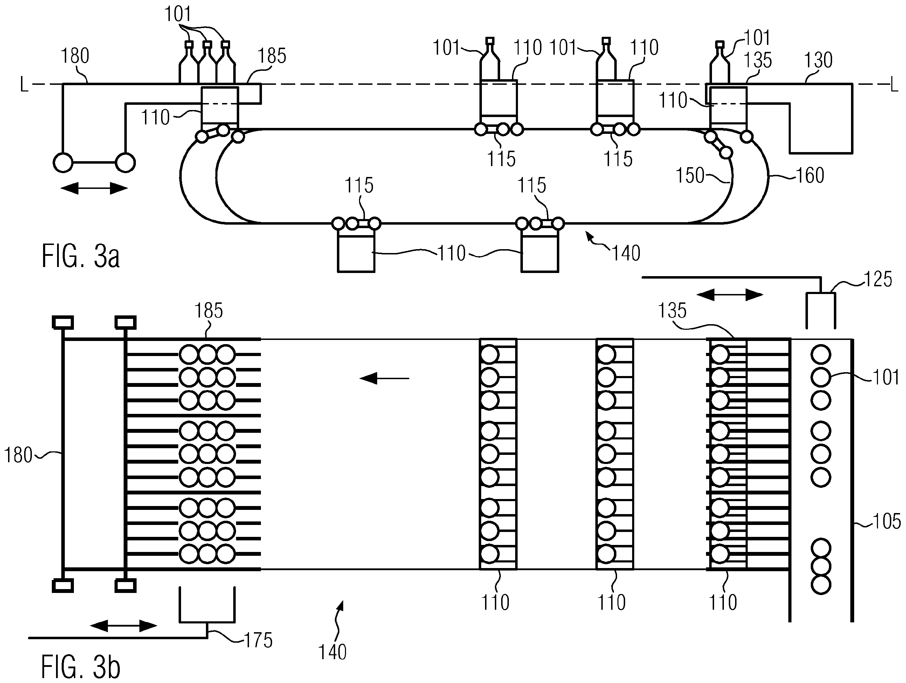

Die Figuren 3a und 3b zeigen eine Transferfördereinrichtung mit einer Vielzahl von Transferpaletten gemäß der vorliegenden Erfindung in Seitenansicht und Draufsicht. Die schematische Seitenansicht der Figur 3a zeigt eine Vielzahl von Transferpaletten 110, die mittels eines Langstator-Linearmotorantriebs (nicht dargestellt) umlaufend um eine senkrecht ausgerichtete geschlossene Transportbahn angetrieben werden. Im oberen Teil der Transportbahn sind die Transferpaletten 110 mit Behältern 101 beladen, die in der dargestellten exemplarischen Weiterbildung mit ihrer Front an der Vorderkante der Palettenoberfläche der Transferpaletten anstehen. Die Transferpaletten 110 werden mittels Läufern 115 in magnetischer Wechselwirkung mit den Langstatoren gemäß gewünschten Weg-Zeit-Profilen bewegt. Im unteren Teil der Transportbahn werden die leeren Transferpaletten 110 zurück zur ersten Transferplattform 130 geführt.

Die Transportbahn der gezeigten Weiterbildung ist mit zwei Schienenpaaren 150 und 160 ausgestattet, die im Bereich der ersten Transferplattform 130 und der zweiten Transferplattform 180 versetzt zueinander angeordnet sind. Die Transferpaletten 110 sind wie unten genauer beschrieben mit einem vorderen Rollenpaar und einem hinteren Rollenpaar jeweils an einem der Schienenpaare 150 und 160 gelagert, sodass die versetzte Anordnung der Schienenpaare bei der Schrägfahrt der Transferpaletten 110 eine im Wesentlichen horizontale Ausrichtung der Palettenoberfläche bewirkt.

In der Draufsicht der Figur 3b ist zudem der Zuförderer 105 erkennbar, der die Behälter, hier bereits vorgruppiert, in einem Einlaufstrom zufördert. Mittels des Einlaufmanipulators 125 der ersten Transfervorrichtung werden die Behälter 101 auf den kammförmigen Auslaufbereich 135 der ersten Transferplattform 130 überführt und dort zur Übernahme durch die Transferpaletten 110 bereitgestellt. Der kammförmige Auslaufbereich 135 der ersten Transferplattform 130 sowie der kammförmige Einlaufbereich 185 der zweiten Transferplattform 180 weisen eine Vielzahl paralleler Zinken auf, in deren Zwischenräume entsprechend ausgebildete stegartige Erhöhungen der Transferpaletten 110 wie in der Figur 3b gezeigt eintreten können.

Aufgrund der vertikalen Bewegung der Palettenoberfläche der Transferpalette 110 im Bereich des kammförmigen Auslaufbereichs 135 treten die stegartigen Erhöhungen der Palettenoberfläche durch die Zwischenräume des kammförmigen Auslaufbereichs hindurch, bis die auf der ersten Transferplattform 130 bereitgestellten Behälter 101 von der Transferplattform abgehoben und übernommen werden. In der Figur 3a ist das Höhenniveau der ersten und zweiten Transferplattform exemplarisch durch eine gestrichelte Linie L-L dargestellt. Es ist jedoch nicht zwingend erforderlich, dass die Oberflächen der ersten und zweiten Transferplattform auf demselben Niveau liegen. Abhängig von der Gestaltung der Transportbahn, d.h. der Führungsschienen, der Transferfördereinrichtung 140 zwischen Übernahme und Übergabe der Behälter 101 können die erste und zweite Transferplattform auch auf unterschiedlichen Niveaus liegen. In der Figur 3a ist zur Demonstration der vorliegenden Erfindung eine Anordnung der Transportbahn zwischen Übernahme und Übergabe der Behälter 101 dargestellt, bei der die Palettenoberfläche der Transferpaletten 110 stets oberhalb des Höhenniveaus L-L liegt.

Im umgekehrten Vorgang zur Übernahme der Behälter 101 von dem kammförmigen Auslaufbereich 135 der ersten Transferplattform 130 durch die Palettenoberfläche der Transferpaletten 110 werden die mitgeführten Behälter 101 durch Absinken der Palettenoberfläche durch den kammförmigen Einlaufbereich 185 der zweiten Transferplattform 180 auf dieser abgestellt. In der Darstellung der Figur 3a wurden bereits drei Behälterzeilen 101 dicht an dicht auf der zweiten Transferplattform 180 abgestellt. Dies wird in der dargestellten Weiterbildung ohne Anpassung der Führung der Palettenoberfläche der Transferpaletten durch eine Verfahrbarkeit der zweiten Transferplattform 180 in Bewegungsrichtung ermöglicht, wie sie in der Figur durch den Doppelpfeil angedeutet ist. Dadurch wird eine Gruppierung der Behälterzeilen auf der zweiten Transferplattform 180 erreicht. Mittels eines Auslaufmanipulators 175, wie er in der Figur 3b schematisch angedeutet ist, können die gruppierten Behälterzeilen von der zweiten Transferplattform 180 übernommen und einem Abförderer zugeführt werden. Im Anschluss kann beispielsweise eine Kommissionierung und/oder Verpackung der gruppierten Behälterzeilen mittels entsprechender Behandlungsstationen erfolgen.

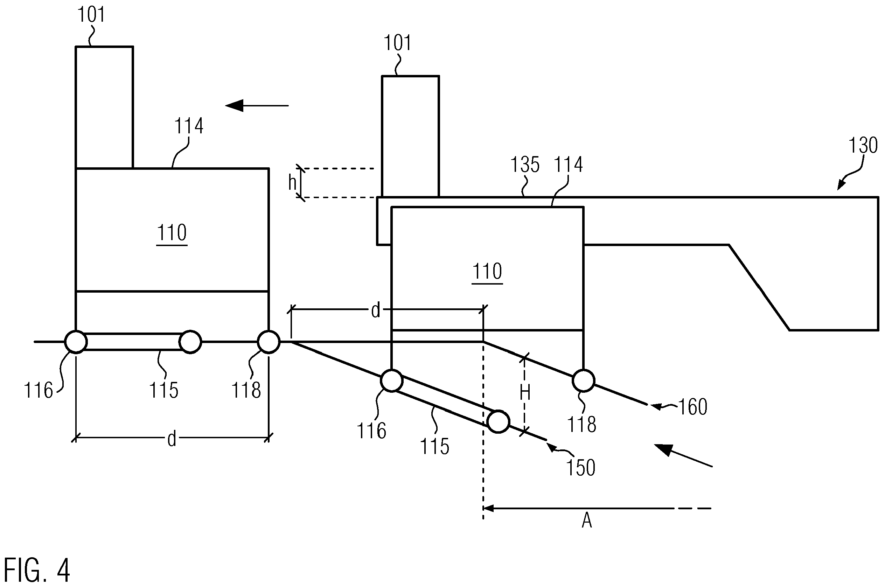

Figur 4 zeigt schematisch die Übernahme eines Behälters von der ersten Transferplattform mit einem Schienensystem gemäß einer ersten Weiterbildung. Der Behälter 101 ist hier schematisch dargestellt. In der dargestellten, nicht limitierenden Weiterbildung wurde der Behälter 101 derart auf der Transferplattform 130 bereitgestellt, dass er mit seiner Front an einer Vorderkante des kammförmigen Auslaufbereichs 135 im Wesentlichen bündig ansteht. Von dort wird der Behälter mittels der von der kammförmig ausgebildeten Palettenoberfläche gebildeten Aufstandsfläche 114 einer Transferpalette 110 übernommen.

Gemäß dieser Weiterbildung weist das Schienensystem der Transportbahn der Transferfördereinrichtung zwei Schienenpaare 150 und 160 auf, die zum Durchtritt der Palettenoberfläche durch den kammförmigen Auslaufbereich einen vertikal versetzten, parallelen Abschnitt A aufweisen. In diesem Bereich sind sich entsprechende Schienen der Schienenpaare 150 und 160 um die Höhe H versetzt in vertikaler Richtung angeordnet, wobei die sich entsprechenden Schienen parallel verlaufen. In der Weiterbildung der Figur 4 sind die Schienen im Bereich der Schrägfahrt der Transferpalette 110 gerade ausgebildet. Es versteht sich jedoch, dass die Schienen auch gekrümmt ausgebildet sein können, wobei erneut sich entsprechende Schienen der Schienenpaare 150 und 160 parallel zueinander geführt werden.

Gemäß der ersten Weiterbildung weist die Transferpalette 110 ein vorderes Rollenpaar 116 und ein hinteres Rollenpaar 118 auf, die wie in der Figur angedeutet in Fahrtrichtung um die Distanz d voneinander beabstandet sind. In Abhängigkeit von diesem Abstand d kann der Höhenversatz H derart gewählt werden, dass die Aufstandsfläche 114 der Palettenoberfläche beim Durchtritt durch den kammförmigen Auslaufbereich 135 wie in der Figur gezeigt horizontal ausgerichtet ist. Auf diese Weise können die auf der Transferplattform 130 bereitgestellten Behälter 101 möglichst sanft übernommen werden, wodurch das Risiko des Umfallens minimiert wird. Der ansteigende Bereich der Führungsschienen 150 und 160 ist dabei derart bezüglich des kammförmigen Auslaufbereichs 135 angeordnet, dass die stegartigen Erhöhungen der Palettenoberfläche der Transferpalette 110 von unten in die Zwischenräume zwischen den Zinken eintreten, wobei schließlich die Oberkante der stegartigen Erhöhungen um eine Höhe h über die Oberfläche der Transferplattform 130 hinaustritt. Die übernommenen Behälter 101 werden somit um diese Höhe h bei der Schrägfahrt der Transferpaletten angehoben. Zur besseren Darstellung ist in der Figur 4 eine stegartige Erhöhung der Transferpalette außerhalb des kammförmigen Auslaufbereichs dargestellt. Dies ist jedoch nicht zwingend erforderlich und kann je nach Position der zu übernehmenden Behälter auf der Transferplattform angepasst werden.

In der dargestellten Weiterbildung werden die Transferpaletten 110 mittels eines Läufers 115, der über magnetische Wechselwirkung mit dem oder den Langstatoren angetrieben wird, bewegt. In der hier dargestellten Weiterbildung ist der Läufer über Rollen an dem ersten Schienenpaar 150 gelagert. Alternativ oder ergänzend kann jedoch auch ein Läufer an dem zweiten Schienenpaare 160 gelagert sein. Die gezeigten Läufer sind mit den Transferpaletten mechanisch gekoppelt und teilen sich das vordere Rollenpaar 116. Auch dies ist nicht zwingend erforderlich, da die Läufer auch in mechanischem Eingriff mit einem entsprechend ausgebildeten Teil der Transferpaletten diese schieben oder ziehen können. Schließlich können die Läufer 115 auch auf eigenen Schienen angeordnet sein.

Nachdem die Palettenoberfläche durch den kammförmigen Auslaufbereich 135 hindurchgetreten ist, erfolgt die Fahrt der Transferpaletten 110 in der hier dargestellten Weiterbildung in einer Ebene. Dabei verlaufen beide Schienenpaare 150 und 160 in dieser Ebene. Die Ebene kann insbesondere horizontal ausgerichtet sein. Durch Anordnung des vorderen Rollenpaares 116 und des hinteren Rollenpaares 118 mit einem identischen vertikalen Abstand zur Aufstandsfläche 114 kann erreicht werden, dass die Behälter 101 auch während des weiteren Transportes entlang der Transferfördereinrichtung auf einer im Wesentlichen horizontal ausgerichteten Palettenoberfläche transportiert werden.

Unter dem Bereich des Durchtritts durch den kammförmigen Auslauf- bzw. Einlaufbereich ist in der vorliegenden Offenbarung insbesondere der Bereich der Schienen zu verstehen, entlang dessen die Palettenoberfläche innerhalb eines Abstandes von maximal 5 cm unterhalb und maximal 10 mm, bevorzugt maximal 5 mm, oberhalb, von der Oberfläche der Transferplattform 130 liegt. Der Bereich des Durchtritts kann jedoch auch auf den Bereich der Schienen erweitert werden, entlang dessen sich die Palettenoberfläche, genauer deren Aufstandsfläche, zumindest teilweise in den Zwischenräumen des Kamms oder über der Oberfläche der Transferplattform befindet.

Die Gestaltung der zweiten Transferplattform 180, insbesondere der relativen Anordnung der Führungsschienen der Transferfördereinrichtung bezüglich des kammförmigen Einlaufbereichs 185 kann in Anlehnung an die Weiterbildung der Figur 4 entsprechend derart gewählt werden, dass die Aufstandsfläche 114 mit dem mitgeführten Behälter 101 beim Absinken durch den kammförmigen Einlaufbereich 185 im Wesentlichen horizontal ausgerichtet ist.

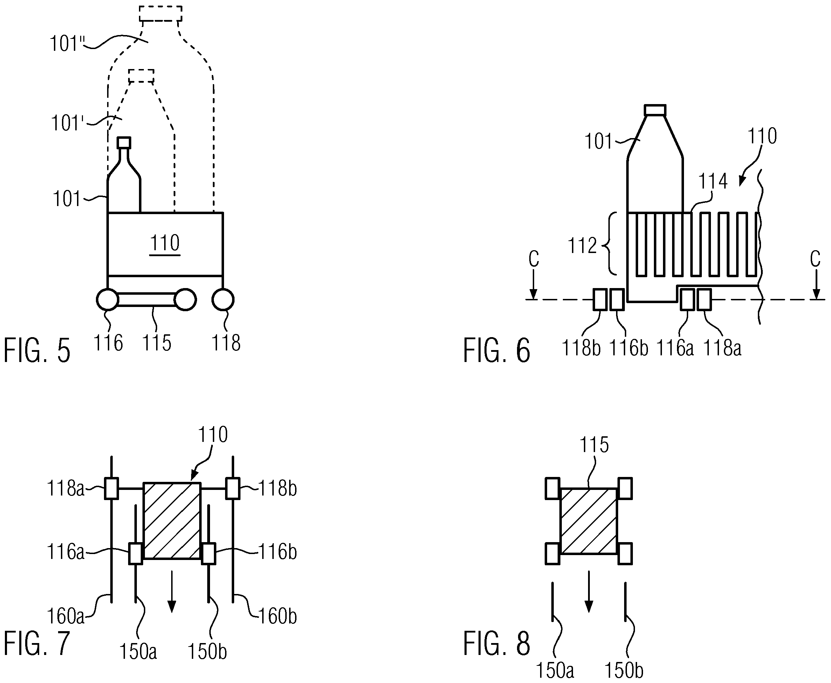

Die Figur 5 zeigt eine Seitenansicht einer Transferpalette mit einem zugeordneten Läufer. Auch hier ist der Läufer 115 mechanisch an die Transferpalette gekoppelt, wobei sich Transferpalette 110 und Läufer 115 das vordere Rollenpaar 116 teilen. Die Breite der Transferpalette 110 in Bewegungsrichtung, genauer der Aufstandsfläche 114, kann derart gewählt werden, dass alle von der Vorrichtung zu transportierenden Behälterformate 101, 101' und 101" auf der Aufstandsfläche Platz finden. Wie bereits erwähnt können die Behälter derart von dem kammförmigen Auslaufbereich übernommen werden, dass sie mit ihrer Front möglichst bündig an einer Vorderkante der Transferpalette 110 ausgerichtet sind, wie es in Figur 5 angedeutet ist. Dies gestattet es, die mitgeführten Behälter auf der zweiten Transferplattform abzustellen, ohne bereits dort vorhandene Behälter zu berühren. Somit können die Behälter dicht an dicht auf der zweiten Transferplattform abgestellt werden.

Die Figur 6 zeigt die Transferpalette der Figur 5 in einer Rückansicht. In dieser Rückansicht ist die kammförmige Ausbildung der Palettenoberfläche 112 der Transferpalette 110 schematisch dargestellt. Die stegartigen Erhöhungen der Palettenoberfläche 112weisen dabei dieselbe Höhe auf, sodass eine ebene Aufstandsfläche 114 für den Behälter 101 gebildet wird. In der Figur 6 ist exemplarisch lediglich der linke Teil der im Allgemeinen in Querrichtung relativ langen Transferpalette 110 dargestellt. Des Weiteren sind die Rollen 116a und 116b des vorderen Rollenpaares sowie die Rollen 118a und 118b des hinteren Rollenpaares in der dargestellten Ansicht erkennbar. Mit Bezug auf die Weiterbildung des Schienensystems gemäß der Figur 4 zeigt die Rückansicht der Figur 6 somit eine Transferpalette 110 bei der Horizontalfahrt.

In Figur 7 sind die Rollenpaare der Transferpalette 110 und die Schienenpaare der Transferfördereinrichtung in Draufsicht auf die durch die gestrichelte Linie C-C in Figur 6 dargestellte Ebene gezeigt. Man erkennt, dass die Schienen 150a und 150b des ersten Schienenpaares 150, an dem die vorderen Rollen 116a und 116b angeordnet sind, innerhalb der Schienen 160a und 160b des zweiten Schienenpaares 160, an dem die hinteren Rollen 118a und 118b angeordnet sind, liegen. Gemäß der dargestellten Weiterbildung sind somit die Schienenpaare 150 und 160 horizontal versetzt zueinander angeordnet. Dies ermöglicht auf einfache Weise die Horizontalfahrt der in Figur 4 dargestellten Transferpaletten 110.

Die Figur 8 zeigt einen Läufer 115 inklusive zugehörigem Schienenpaar 150a und 150b in einer Draufsicht. Dieser Läufer 115 kann beispielsweise vollständig unterhalb der in der Figur 7 gezeigten Transferpalette 110 angeordnet sein. Gemäß der dargestellten Weiterbildung bewegt sich der Läufer 115 auf den Schienen 150a und 150b des Schienenpaares 150, an dem auch die vorderen Rollen 116a und 116b der Transferpalette gelagert sind. Es können jedoch wie bereits erwähnt auch separate Schienen für den Läufer 115 vorgesehen sein.

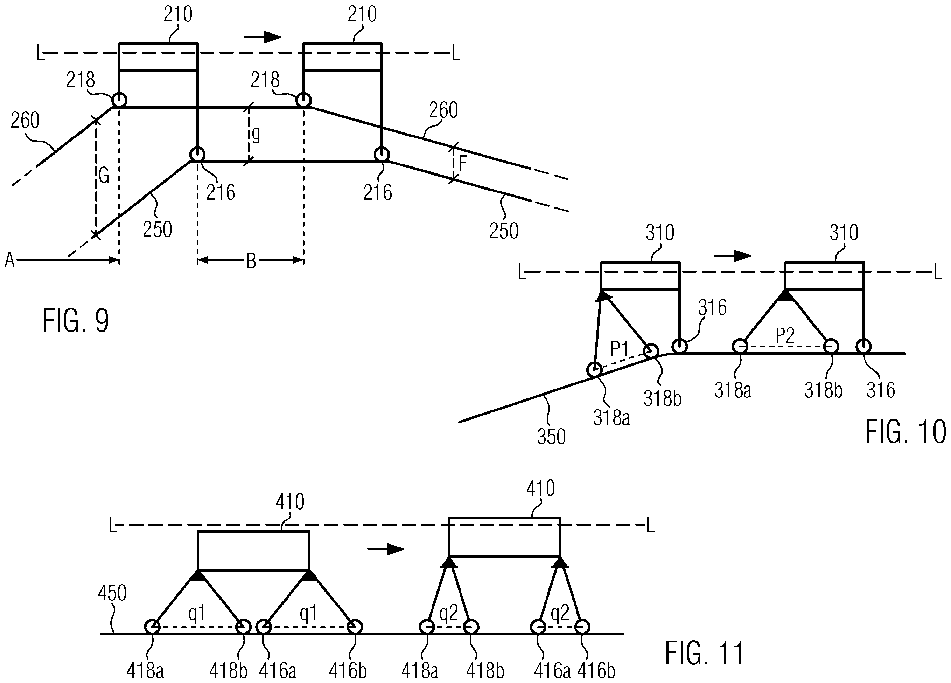

Die Figur 9 zeigt Transferpaletten mit einem zugehörigen Schienensystem gemäß einer zweiten Weiterbildung. Wie in Figur 3a ist eine Höhenlinie L-L gestrichelt dargestellt, um eine Referenz für das Niveau der Oberfläche der ersten und/oder zweiten Transferplattform zu geben. Auch hier sind die Transferpaletten 210 mit einem vorderen Rollenpaar 216 an einem ersten Schienenpaar 250 und mit einem hinteren Rollenpaar 218 an einem zweiten Schienenpaar 260 gelagert. Die Figur 9 zeigt den Verlauf der beiden Schienenpaare 250 und 260 sowohl bei der Schrägfahrt zur Übernahme der Behälter als auch bei der Schrägfahrt zur Abgabe der Behälter. Auch bei dieser Weiterbildung sind die Schienenpaare 250 und 260 zum Durchtritt der Palettenoberfläche durch den kammförmigen Auslauf- bzw. Einlaufbereich vertikal versetzt zueinander angeordnet. Während der Höhenversatz G beim Durchtritt durch den kammförmigen Auslaufbereich 135 im Schienenbereich A relativ groß ist, ist der Höhenversatz F beim Durchtritt durch den kammförmigen Einlaufbereich 185 relativ klein. Die Höhenunterschiede sind in der Figur 9 zum besseren Verständnis übertrieben dargestellt und können je nach Bedarf angepasst werden.

Der Unterschied zwischen den Höhenversätzen G und F resultiert bei der dargestellten Weiterbildung daraus, dass das vordere Rollenpaar 216 einen größeren vertikalen Abstand von der Palettenoberfläche der Transferpaletten 210 als das hintere Rollenpaar 218 hat. Selbstverständlich kann die Ausbildung auch umgekehrt sein, wobei die Schienenpaare 250 und 260 entsprechend angeordnet werden. Wegen der unterschiedlichen Abstände von der Palettenoberfläche sind die Schienenpaare 250 und 260 auch in einem Abschnitt B anschließend an den Durchtritt der Palettenoberfläche durch den kammförmigen Auslaufbereich vertikal versetzt angeordnet, um eine im Wesentlichen horizontale Ausrichtung der Palettenoberfläche bei der Horizontalfahrt zu ermöglichen. Der vertikale Versatz g zwischen den Schienenpaaren liegt im Bereich B zwischen dem Höhenversatz F und dem Höhenversatz G und ist durch den Unterschied der Abstände der Rollenpaare von der Palettenoberfläche gegeben. Bei der Weiterbildung gemäß der Figur 9 kann auf einen horizontalen Versatz der Schienenpaare 250 und 260 verzichtet werden.

Die Figur 10 zeigt Transferpaletten mit einem zugehörigen Schienensystem gemäß einer dritten Weiterbildung. Gemäß der dritten Weiterbildung weisen die Transferpaletten 310 neben dem vorderen Rollenpaar 316 zwei hintere Rollenpaare 318a und 318b auf, die, insbesondere mittels des Langstator-Linearmotorantriebs, individuell gesteuert bewegbar an dem Schienenpaar 350 gelagert sind. Insbesondere können die Rollenpaare 318a und 318b jeweils einem eigenen Läufer des Langstator-Linearmotorantriebs zugeordnet sein oder über eigene Sekundärteile verfügen. Durch entsprechende Weg-Zeit-Profile im Bereich des Durchtritts durch den kammförmigen Auslaufbereich der Transferplattform, deren Oberfläche wiederum durch die gestrichelte Linie L-L angedeutet ist, kann der Abstand zwischen aufeinanderfolgenden hinteren Rollenpaaren 318b und 318a von p₁ auf p₂ vergrößert werden, so wie es in der Figur 10 angedeutet ist.

Da die hinteren Rollenpaare 318a und 318b über ein Scherengelenk an der Transferpalette 310 gelagert sind, ändert diese Änderung des Abstands p die Höhe der Palettenoberfläche über der Führungsschiene 350. Auf diese Weise kann abhängig von der Steigung der hier gekrümmt dargestellten Führungsschiene 350 eine im Wesentlichen horizontale Ausrichtung der Palettenoberfläche erzielt werden. Auf diese Weise kann selbst ohne weiteres Schienenpaar ein im Wesentlichen horizontaler Durchtritt der Palettenoberfläche durch die kammförmigen Auslauf- und Einlaufbereiche der Transferplattformen erzielt werden. Die dargestellte Weiterbildung kommt insbesondere ohne vertikal versetzte Schienenpaare aus und kann somit kompakter ausgeführt werden.

Die Figur 11 schließlich zeigt Transferpaletten mit einem zugehörigen Schienensystem gemäß einer vierten Weiterbildung. Gemäß dieser Weiterbildung weisen die Transferpaletten 410 auch zwei vordere Rollenpaare 416a und 416b auf, deren Abstand q wie auch der Abstand der hinteren Rollenpaare 418a und 418b je nach Bedarf von q₁ auf q₂ verringert werden kann. Auch hier sind die Rollenpaare über jeweilige Scherengelenke an den Transferpaletten 410 gelagert. Durch Verringerung des Abstandes q zwischen aufeinanderfolgenden Rollenpaaren lässt sich wie in der Figur 11 angedeutet die Höhe der Palettenoberfläche der Transferpalette 410 über das Niveau der Oberfläche der Transferplattform, das erneut durch die gestrichelte Linie L-L angedeutet ist, anheben. Durch gleichzeitige Anpassung des Abstandes zwischen aufeinanderfolgenden vorderen Rollenpaaren und aufeinanderfolgenden hinteren Rollenpaaren kann zudem bewirkt werden, dass die Palettenoberfläche stets im Wesentlichen horizontal ausgerichtet ist.

Gemäß dieser Weiterbildung genügt somit ein horizontal ausgerichtetes Schienenpaar 450, um die Vertikalbewegung der Palettenoberfläche zur Übernahme und Übergabe der Behälter zu erzeugen. Insbesondere kann die Vertikalbewegung der Palettenoberfläche durch eine Steuer- und/oder Regeleinheit (nicht dargestellt) flexibel angepasst werden, sodass beispielsweise der Ort des kammförmigen Einlaufbereichs der zweiten Transferplattform, an dem die mitgeführten Behälter abgestellt werden, flexibel variiert werden kann. Auf diese Weise kann auf eine Verfahrbarkeit der zweiten Transferplattform verzichtet werden, wobei die Behälter weiterhin dicht an dicht auf der Transferplattform abgestellt werden können. Die gezielte Variation des Abstandes aufeinanderfolgender Rollenpaare gestattet auch eine automatische Anpassung des Behälterformats durch einfache Anpassung der Weg-Zeit-Profile, beispielsweise in der Form einer Sortenverwaltung einer speicherprogrammierbaren Steuereinheit. Wegen der möglichen horizontalen Anordnung des Schienenpaares 450 ist die Transferfördereinrichtung dieser Weiterbildung zudem besonders kompakt und wenig fehleranfällig.

Die beschriebenen Weiterbildungen gestatten es, eine oder mehrere Behälterzeilen gezielt und ohne Umfallen von einer ersten Transferplattform zu übernehmen, entlang einer Transportstrecke zu transportieren, und ebenso gezielt und ohne Umfallen an eine zweite Transferplattform zu übergeben. Dabei können die individuellen Weg-Zeit-Profile der Transferpaletten eines Langstator-Linearmotorantriebs dazu genutzt werden, eine von den Manipulatoren unabhängige Pufferfunktion zu ermöglichen. Der Transport der Behälter umfasst zudem eine Gruppierung der Behälterzeilen auf der zweiten Transferplattform. Des Weiteren werden die Behälter drucklos und somit schonend transportiert.

## Patentansprüche

1. Vorrichtung zum Gruppieren von Behältern, umfassend:
eine Vielzahl von Transferpaletten (110, 210, 310, 410), die dazu ausgebildet sind, jeweils wenigstens einen Behälter (1, 101) auf einer Palettenoberfläche (112) der Transferpaletten stehend zu transportieren; und
eine erste Transfervorrichtung (120) mit einer ersten Transferplattform (130) und einem Einlaufmanipulator (125), der dazu ausgebildet ist, Behälter (1, 101) von einem Zuförderer (105) auf die erste Transferplattform zu überführen;
wobei die Palettenoberfläche (112) jeder Transferpalette (110, 210, 310, 410) eine Vielzahl stegartiger Erhöhungen aufweist, die eine Aufstandsfläche (114) für den wenigstens einen Behälter (1,101) bilden;
und wobei
die erste Transferplattform (130) einen kammförmigen Auslaufbereich (135) aufweist, der derart ausgebildet ist, dass die stegartigen Erhöhungen der Palettenoberfläche (112) zur Übernahme des wenigstens einen Behälters (1, 101) durch die Zwischenräume des kammförmigen Auslaufbereichs (135) hindurchtreten können;
**dadurch gekennzeichnet, dass**
die Vorrichtung weiterhin eine Transferfördereinrichtung (140) mit einem Langstator-Linearmotorantrieb umfasst, die dazu ausgebildet ist, die Transferpaletten (110, 210, 310, 410) einzeln und unabhängig voneinander entlang einer geschlossenen Transportbahn zu bewegen, und
wobei die erste Transfervorrichtung (120) derart an der Transportbahn angeordnet ist und die Transferfördereinrichtung (140) und die Vielzahl der Transferpaletten (110, 210, 310, 410) derart ausgebildet sind, dass die stegartigen Erhöhungen der Palettenoberfläche (112) der Transferpaletten beim Passieren der ersten Transferplattform (130) durch die Zwischenräume des kammförmigen Auslaufbereichs (135) hindurchtreten.

2. Vorrichtung nach Anspruch 1, wobei die Transferfördereinrichtung (140) und die Vielzahl der Transferpaletten (110, 210, 310, 410) derart ausgebildet sind, dass die Palettenoberfläche (112) der Transferpaletten beim Durchtritt durch den kammförmigen Auslaufbereich (135) im Wesentlichen horizontal ausgerichtet ist.

3. Vorrichtung nach Anspruch 2, wobei jede Transferpalette (110, 210) wenigstens ein vorderes Rollenpaar (116) und wenigstens ein hinteres Rollenpaar (118) aufweist, die an verschiedenen Schienenpaaren (150, 160, 250, 260) der Transportbahn gelagert sind, und wobei eine relative Anordnung des vorderen und des hinteren Rollenpaares (116, 118) bezüglich der Palettenoberfläche (112) und bezüglich der Schienenpaare (150, 160, 250, 260) derart gewählt ist, dass die Palettenoberfläche (112) beim Durchtritt durch den kammförmigen Auslaufbereich (135) im Wesentlichen horizontal ausgerichtet ist.

4. Vorrichtung nach Anspruch 3, wobei die Schienenpaare (150, 160, 250, 260) zum Durchtritt der Palettenoberfläche (112) durch den kammförmigen Auslaufbereich (135) einen vertikal versetzten, parallelen Abschnitt aufweisen.

5. Vorrichtung nach Anspruch 4, wobei die Schienenpaare (250, 260) auch in einem Abschnitt anschließend an den Durchtritt der Palettenoberfläche (112) durch den kammförmigen Auslaufbereich (135) vertikal versetzt angeordnet sind.

6. Vorrichtung nach Anspruch 4 oder 5, wobei die Schienenpaare (150, 160, 250, 260) zusätzlich horizontal versetzt zueinander angeordnet sind.

7. Vorrichtung nach Anspruch 2, wobei jede Transferpalette (310, 410) wenigstens zwei vordere Rollenpaare (416a, 416b) und/oder wenigstens zwei hintere Rollenpaare (318a, 318b, 418a, 418b) aufweist, die jeweils, insbesondere mittels des Langstator-Linearmotorantriebs, individuell gesteuert bewegbar an einem Schienenpaar (350, 450) der Transportbahn gelagert sind, wobei die Transferpalette (310, 410) derart ausgebildet ist, dass durch Veränderung des Abstands zwischen aufeinanderfolgenden vorderen Rollenpaaren (416a, 416b) und/oder zwischen aufeinanderfolgenden hinteren Rollenpaaren (318a, 318b, 418a, 418b) eine Stellung der Palettenoberfläche (112) bezüglich der Horizontalen verändert werden kann.

8. Vorrichtung nach einem der vorhergehenden Ansprüche, wobei die Transferfördereinrichtung (140) für jede Transferpalette (110, 210, 310, 410) je wenigstens einen Läufer (115) des Langstator-Linearmotorantriebs aufweist.

9. Vorrichtung nach einem der vorhergehenden Ansprüche, weiterhin eine zweite Transfervorrichtung (170) mit einer zweiten Transferplattform (180) mit einem kammförmigen Einlaufbereich (185) umfassend,
wobei der kammförmige Einlaufbereich (185) derart ausgebildet und an der Transportbahn angeordnet ist, dass die stegartigen Erhöhungen der Palettenoberfläche (112) der Transferpaletten (110, 210, 310, 410) zur Übergabe des wenigstens einen Behälters (1, 101) in die Zwischenräume des kammförmigen Einlaufbereichs (185) eintreten können; und
wobei die Transferfördereinrichtung (140) derart ausgebildet ist, dass die stegartigen Erhöhungen der Palettenoberfläche (112) der Transferpaletten (110, 210, 310, 410) beim Passieren des kammförmigen Einlaufbereichs (185) zur Übergabe des wenigstens einen Behälters (1, 101) unter eine Oberfläche der zweiten Transferplattform (180) absinken.

10. Vorrichtung nach Anspruch 9, wobei zumindest der kammförmige Einlaufbereich (185) der zweiten Transferplattform (180) in Bewegungsrichtung der Transferpaletten (110, 210, 310, 410) verfahrbar ausgebildet ist.

11. Vorrichtung nach Anspruch 9 oder 10, wobei die zweite Transfervorrichtung (170) weiterhin einen Auslaufmanipulator (175) aufweist, der dazu ausgebildet ist, Behälter (1, 101) gruppenweise von der zweiten Transferplattform (180) an einen Abförderer (190) zu übergeben.

12. Vorrichtung nach einem der vorhergehenden Ansprüche, wobei die stegartigen Erhöhungen der Transferpaletten (110, 210, 310, 410) eine vordere und/oder hintere Kante aufweisen.

13. Verwendung einer Vorrichtung nach einem der vorhergehenden Ansprüche zum Gruppieren von Behältern, umfassend:
Überführen wenigstens einer Behälterzeile von einemZuförderer (105) auf die erste Transferplattform (130) mittels des Einlaufmanipulators (125);
Übernahme der wenigstens einen Behälterzeile von der ersten Transferplattform (130) mittels einer Transferpalette (110, 210, 310, 410) durch Hindurchtreten der stegartigen Erhöhungen der Palettenoberfläche (112) durch den kammförmigen Auslaufbereich (135) der ersten Transferplattform (130), wobei die wenigstens eine Behälterzeile insbesondere derart übernommen wird, dass die Behälterzeile an einer Vorderkante der Palettenoberfläche (112) ausgerichtet ist; und
Übergabe der wenigstens einen Behälterzeile an eine zweite Transferplattform (180) mittels der Transferpalette (110, 210, 310, 410) durch Absinken der stegartigen Erhöhungen der Palettenoberfläche (112) durch den kammförmigen Einlaufbereich (185) der zweiten Transferplattform (180).

14. Verwendung nach Anspruch 13, weiterhin ein vorübergehendes Puffern einer Vielzahl von Behälterzeilen mittels der Vielzahl von Transferpaletten (110, 210, 310, 410) der Transferfördereinrichtung (140) umfassend.

## Claims

1. Device for grouping containers, comprising:
a plurality of transfer pallets (110, 210, 310, 410) each configured for conveying at least one container (1, 101) standing upright on a pallet surface (112) of the transfer pallets; and
a first transfer device (120) with a first transfer platform (130) and an infeed manipulator (125) configured to transfer containers (1, 101) from a feed conveyor (105) onto the first transfer platform;
wherein the pallet surface (112) of each transfer pallet (110, 210, 310, 410) has a plurality of ridge-like elevations forming a support surface (114) for the at least one container (1, 101);
and wherein
the first transfer platform (130) has a comb-shaped outlet area (135) configured for allowing the ridge-like elevations of the pallet surface (112) to pass through intermediate spaces of the comb-shaped outlet area (135) for taking over the at least one container (1, 101);
**characterized in that**
the device further comprising a transfer conveyor (140) with a long-stator linear motor drive, which is configured to move the transfer pallets (110, 210, 310, 410) individually and independently of one another along a closed conveying path, and
wherein the first transfer device (120) is arranged on the conveying path such that and the transfer conveyor (140) and the plurality of transfer pallets (110, 210, 310, 410) are configured such that the ridge-like elevations of the pallet surface (112) of the transfer pallets pass through the intermediate spaces of the comb-shaped outlet area (135) when passing the first transfer platform (130).

2. The apparatus according to claim 1, wherein the transfer conveyor (140) and the plurality of transfer pallets (110, 210, 310, 410) are configured such that the pallet surface (112) of the transfer pallets is oriented substantially horizontally when passing through the comb-shaped outlet area (135).

3. Device according to claim 2, wherein each transfer pallet (110, 210) comprises at least one front roller pair (116) and at least one rear roller pair (118) which are supported on different pairs of rails (150, 160, 250, 260) of the conveying path, and wherein a relative arrangement of the front roller pair and the rear roller pair (116, 118) with respect to the pallet surface (112) and with respect to the pairs of rails (150, 160, 250, 260) is selected such that the pallet surface (112) is oriented substantially horizontally when passing through the comb-shaped outlet area (135).

4. The device according to claim 3, wherein the pairs of rails (150, 160, 250, 260) have a vertically offset, parallel section so as to allow the pallet surface (112) to pass through the comb-shaped outlet area (135).

5. The device according to claim 4, wherein the pairs of rails (250, 260) are arranged such that they are vertically offset in a section subsequent to the passage of the pallet surface (112) through the comb-shaped outlet area (135).

6. Device according to claim 4 or 5, wherein the pairs of rails (150, 160, 250, 260) are arranged additionally horizontally offset relative to one another.

7. Device according to claim 2, wherein each transfer pallet (310, 410) comprises at least two front roller pairs (416a, 416b) and/or at least two rear roller pairs (318a, 318b, 418a, 418b), which are each supported on a pair of rails (350, 450) of the conveying path such that they are movable under individual control, in particular by means of the long-stator linear motor drive, wherein the transfer pallet (310, 410) is configured such that by changing a distance between successive front roller pairs (416a, 416b) and/or between successive rear roller pairs (318a, 318b, 418a, 418b) a position of the pallet surface (112) relative to horizontal is changeable.

8. Device according to one of the preceding claims, wherein the transfer conveyor (140) comprises for each transfer pallet (110, 210, 310, 410) at least one runner (115) of the long-stator linear motor drive.

9. Apparatus according to any one of the preceding claims, further comprising a second transfer device (170) with a second transfer platform (180) having a comb-shaped inlet area (185),
wherein the comb-shaped inlet area (185) is configured such that and arranged on the conveying path such that the ridge-like elevations of the pallet surface (112) of the transfer pallets (110, 210, 310, 410) are capable of entering the intermediate spaces of the comb-shaped inlet area (185) for transfer of the at least one container (1, 101); and
wherein the transfer conveyor (140) is configured such that the ridge-like elevations of the pallet surface (112) of the transfer pallets (110, 210, 310, 410) move, when the transfer pallets (110, 210, 310, 410) pass the comb-shaped inlet area (185), down to a level below a surface of the second transfer platform (180) for transfer of the at least one container (1, 101).

10. Device according to claim 9, wherein at least the comb-shaped inlet area (185) of the second transfer platform (180) is configured such that it is displaceable in a direction of movement of the transfer pallets (110, 210, 310, 410).

11. Device according to claim 9 or 10, wherein the second transfer device (170) further comprises a outfeed manipulator (175) configured for transferring containers (1, 101) in groups from the second transfer platform (180) to a discharge conveyor (190).

12. Device according to one of the preceding claims, wherein the rifge-like elevations of the transfer pallets (110, 210, 310, 410) comprise a front and/or rear edge.

13. A method for using a device according to any one of the preceding claims for grouping containers, comprising:
transferring at least one container line from a feed conveyor (105) to the first transfer platform (130) by means of the infeed manipulator (125);
taking over the at least one container line from the first transfer platform (130) by means of a transfer pallet (110, 210, 310, 410) inn that the ridge-like elevations of the pallet surface (112) pass through the comb-shaped outlet area (135) of the first transfer platform (130), the at least one container line being taken over such that the container line is aligned at a front edge of the pallet surface (112); and
transferring the at least one container line to a second transfer platform (180) by means of the transfer pallet (110, 210, 310, 410) in that the ridge-like elevations of the pallet surface (112) move downwards through a comb-shaped inlet area (185) of the second transfer platform (180).

14. Use according to claim 13, further comprising temporarily buffering a plurality of container lines by means of the plurality of transfer pallets (110, 210, 310, 410) of the transfer conveyor (140).

## Revendications

1. Dispositif de regroupement de contenants, comprenant :
une pluralité de palettes de transfert (110, 210, 310, 410) qui sont conçues pour transporter à la verticale d'au moins un contenant (1, 101) sur une surface de palette (112) des palettes de transfert ; et
un premier dispositif de transfert (120) pourvu d'une première plate-forme de transfert (130) et d'un manipulateur d'admission (125) qui est conçu pour faire passer des contenants (1, 101) d'un convoyeur d'alimentation (105) à la première plate-forme de transfert ;
dans lequel la surface de palette (112) de chaque palette de transfert (110, 210, 310, 410) présente une pluralité de parties surélevées en forme de nervure qui forment une surface d'appui (114) pour le au moins un contenant (1, 101) ;
et dans lequel la première plate-forme de transfert (130) présente une zone d'évacuation en forme de peigne (135), qui est conçue de telle sorte que les parties surélevées en forme de nervure de la surface de palette (112) peuvent traverser les espaces intermédiaires de la zone d'évacuation en forme de peigne (135) pour réceptionner le au moins un contenant (1, 101) ;
**caractérisé en ce que**
le dispositif comprend en outre un convoyeur de transfert (140) avec un entraînement à moteur linéaire-stator longitudinal qui est conçu pour déplacer les palettes de transfert (110, 210, 310, 410) individuellement et indépendamment les unes des autres le long d'une voie de transport fermée, et
dans lequel le premier dispositif de transfert (120) est agencé sur la voie de transport et le convoyeur de transfert (140) et la pluralité de palettes de transfert (110, 210, 310, 410) sont conçus de telle sorte que les parties surélevées en forme de peigne de la surface de palette (112) des palettes de transfert, lors du passage de la première plateforme de transfert (130), traversent les espaces de la zone d'évacuation en forme de peigne (135).

2. Dispositif selon la revendication 1, dans lequel le convoyeur de transfert (140) et la pluralité de palettes de transfert (110, 210, 310, 410) sont conçus de telle sorte que la surface de palette (112) des palettes de transfert est orientée sensiblement horizontalement lors du passage à travers la zone d'évacuation en forme de peigne (135).

3. Dispositif selon la revendication 2, dans lequel chaque palette de transfert (110, 210) présente au moins une paire de rouleaux avant (116) et au moins une paire de rouleaux arrière (118) qui sont montés sur différentes paires de rails (150, 160, 250, 260) de la voie de transport, et dans lequel un agencement relatif de la paire de rouleaux avant et arrière (116, 118) par rapport à la surface de palette (112) et par rapport aux paires de rails (150, 160, 250, 260) est choisie de telle sorte que la surface de palette (112) est orientée sensiblement horizontalement lors du passage à travers la zone d'évacuation en forme de peigne (135).

4. Dispositif selon la revendication 3, dans lequel les paires de rails (150, 160, 250, 260) présentent une section parallèle décalée verticalement pour le passage de la surface de palette (112) à travers la zone d'évacuation en forme de peigne (135).

5. Dispositif selon la revendication 4, dans lequel les paires de rails (250, 260) sont également agencées décalées verticalement dans une section adjacente au passage de la surface de palette (112) à travers la zone d'évacuation en forme de peigne (135).

6. Dispositif selon la revendication 4 ou 5, dans lequel les paires de rails (150, 160, 250, 260) sont en outre agencées décalées horizontalement les unes par rapport aux autres.

7. Dispositif selon la revendication 2, dans lequel chaque palette de transfert (310, 410) présente au moins deux paires de rouleaux avant (416a, 416b) et/ou au moins deux paires de rouleaux arrière (318a, 318b, 418a, 418b), qui sont respectivement montées mobiles de manière commandée individuellement sur une paire de rails (350, 450) de la voie de transport, en particulier au moyen de l'entraînement à moteur linéaire-stator longitudinal, dans lequel la palette de transfert (310, 410) est conçue de telle sorte qu'une position de la surface de palette (112) par rapport aux horizontales peut être modifiée en modifiant la distance entre les paires de rouleaux avant successives (416a, 416b) et/ou entre les paires de rouleaux arrière successives (318a, 318b, 418a, 418b).

8. Dispositif selon l'une quelconque des revendications précédentes, dans lequel le convoyeur de transfert (140) comprend au moins un rotor (115) de l'entraînement à moteur linéaire-stator longitudinal pour chaque palette de transfert (110, 210, 310, 410).

9. Dispositif selon l'une quelconque des revendications précédentes, comprenant en outre un second dispositif de transfert (170) avec une seconde plate-forme de transfert (180) avec une zone d'entrée en forme de peigne (185),
dans lequel la zone d'entrée en forme de peigne (185) est conçue et agencée au niveau de la voie de transport de telle sorte que les parties surélevées en forme de nervure de la surface de palette (112) des palettes de transfert (110, 210, 310, 410) peuvent pénétrer dans les espaces intermédiaires de la zone d'entrée en forme de peigne (185) pour la transmission du au moins un contenant (1, 101) ; et
dans lequel le convoyeur de transfert (140) est conçu de telle sorte que les parties surélevées en forme de peigne de la surface de palette (112) des palettes de transfert (110, 210, 310, 410) descendent sous une surface de la seconde plate-forme de transfert (180) lors du passage de la zone d'entrée en forme de peigne (185) pour la transmission du au moins un contenant (1, 101).

10. Dispositif selon la revendication 9, dans lequel au moins la zone d'entrée en forme de peigne (185) de la seconde plate-forme de transfert (180) est conçue de manière à pouvoir se déplacer dans la direction de déplacement des palettes de transfert (110, 210, 310, 410).

11. Dispositif selon la revendication 9 ou 10, dans lequel le second dispositif de transfert (170) comprend en outre un manipulateur d'évacuation (175), qui est conçu pour transmettre de manière groupée des contenants (1, 10 ") de la seconde plate-forme de transfert (180) à un convoyeur de décharge (190).

12. Dispositif selon l'une quelconque des revendications précédentes, dans lequel les parties surélevées en forme de nervure des palettes de transfert (110, 210, 310, 410) présentent un bord avant et/ou arrière.

13. Utilisation d'un dispositif selon l'une quelconque des revendications précédentes pour grouper des contenants, comprenant les étapes consistant à :
transférer au moins une ligne de contenants d'un convoyeur d'alimentation (105) à la première plateforme de transfert (130) au moyen du manipulateur d'admission (125) ; prendre en charge la au moins une ligne de contenants depuis la première plateforme de transfert (130) au moyen d'une première palette de transfert (110, 210, 310, 410) en faisant passer les parties surélevées en forme de nervure de la surface de palette (112) à travers la zone d'évacuation en forme de peigne (135) de la première plate-forme de transfert (130), dans laquelle la au moins une ligne de contenants est en particulier prise en charge de telle sorte que la ligne de contenants est orientée au niveau d'un bord d'attaque de la surface de palette (112) ; et
transmettre la au moins une ligne de contenants au niveau d'une seconde plate-forme de transfert (180) au moyen de la palette de transfert (1 210 310, 410) en faisant descendre les parties surélevées en forme de peigne de la surface de palette (112) à travers la zone d'entrée en forme de peigne (185) de la seconde plateforme de transfert (180).

14. Utilisation selon la revendication 14, comprenant en outre une mise en mémoire tampon temporaire d'une pluralité des lignes de contenants au moyen de la pluralité de palettes de transfert (210, 310, 410) du convoyeur de transfert (140).
